# EUROPEAN PATENT SPECIFICATION

(11) **EP 2 448 296 B1**
(45) Date of publication and mention of the grant of the patent: **12.02.2014**
(21) Application number: 10791461.6
(22) Date of filing: 09.06.2010
(51) Int. Cl.: H04W 4/22, H04W 4/08, H04W 76/06

(54) **METHOD AND NETWORK SIDE EQUIPMENT FOR MANAGING CLOSED SUBSCRIBER GROUP MEMBERSHIP**
VERFAHREN UND NETZWERKSEITIGE AUSRÜSTUNG ZUR VERWALTUNG DER MITGLIEDSCHAFT IN GESCHLOSSENEN TEILNEHMERGRUPPEN
PROCÉDÉ ET ÉQUIPEMENT CÔTÉ RÉSEAU POUR GÉRER L'APPARTENANCE À UN GROUPE FERMÉ D'ABONNÉS

(30) Priority: 26.06.2009 CN 200910148429
(43) Date of publication of application: 02.05.2012
(73) Proprietor: Huawei Device Co., Ltd., Longgang District Shenzhen Guangdong 518129 (CN)
(72) Inventor: CHEN, Guoqiao, Shenzhen Guangdong 518129 (CN); LIU, Juan, Shenzhen Guangdong 518129 (CN); GUAN, Zhi, Shenzhen Guangdong 518129 (CN); WANG, Rui, Shenzhen Guangdong 518129 (CN)
(74) Representative: Isarpatent
(86) International application number: PCT/CN2010/073738
(87) International publication number: WO 2010/148955

(56) References cited:
- WO-A2-2009/044318
- CN-A- 101 400 071
- CN-A- 101 400 107
- QUALCOMM EUROPE: "Pseudo-CR on Impact of CSG Access Control on NAS Procedures", 3GPP DRAFT; C1-082353-CSG ACCESS CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Zagreb, Croatia; 20080616, 16 June 2008 (2008-06-16), XP050029619, [retrieved on 2008-06-16]
- ZTE ET AL: "Modify the allowed CSG list in UE", 3GPP DRAFT; S2-093220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Tallinn; 20090505, 5 May 2009 (2009-05-05), XP050346312, [retrieved on 2009-05-05]
- CATT ET AL: "Allowed CSG List Synchronization between the UE and Network", 3GPP DRAFT; S2-093406, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Tallinn; 20090505, 5 May 2009 (2009-05-05), XP050346490, [retrieved on 2009-05-05]

## Description

### FIELD OF THE INVENTION

The present invention relates to the field of communications technologies, and in particular, to a method, system, network side device, and UE (user equipment) of managing CSG (Closed Subscriber Group) membership.

### BACKGROUND OF THE INVENTION

The 3GPP (3rd Generation Partnership Project) launches an evolved project EPS (Evolved Packet System) of an all-IP packet domain core network to formulate a transplantable 3GPP system architecture featuring high data rate, short delay, and data packetization, and supporting multiple radio access technologies.

In an EPC (Evolved Packet Core), the 3GPP proposes an access service based on an HNB (Home NodeB, HNB) or HeNB (home evolved NodeB) to provide a higher data transmission rate, a shorter delay, and reduce the operating expenditure of an operator. For this service, the HeNB is deployed in places such as homes, shopping malls, or enterprises, and is configured to three access modes: Close (close), Hybrid (hybrid), and Open (open), according to the agreement between a network operator and the owner of the HeNB. The HeNB in Close mode only allows a specific subscriber group complying with the roaming protocol to access the network through the HeNB. The specific subscriber group that is allowed to access the network through the HeNB is referred to as a CSG. According to the definition of the 3GPP, each CSG on a PLMN that each CSG belongs to has a unique CSG ID. One CSG cell includes one or multiple HeNBs, all HeNBs serving the same CSG share the same CSG ID, and these HeNB cells are referred to as CSG cells.

One UE (User Equipment) may join multiple CSGs. The UE locally saves an ACL (Allowed CSG List) controlled by an operator. The HSS (Home Subscriber Server) of the UE also saves an ACL for the UE. The ACL records the CSG ID and related information such as PLMN ID and timeout interval, which are controlled by the operator and allow the UE to access the CSG cell. In addition, the UE locally saves a UCL (User CSG List) controlled by the user, and the UCL records the CSG ID and related information such as PLMN ID and timeout interval, which are controlled by the user and allow the UE to access the CSG cell.

A 3GPP draft (QUALCOMM EUROPE: "Pseudo-CR on Impact of CSG Access Control on NAS Procedures", 3GPP DRAFT, June 16, 2008, XP050029619) discloses a solution of modification of the cause values in 3GPP TS 24.301 to tell the UE the causes of NAS procedures, in order to support CSG Access Control.

Another 3GPP draft (ZTE et al: "Modify the allowed CSG list in UE", 3GPP DRAFT, May 5, 2009, XP050346312) discusses on synchronization of allowed CSG list between a UE and a network. The CSG list server can use OMA DM/OTA procedure to update the allowed CSG list in UE, but the OMA DM/OTA is optional deployment by operator. In this case, only NAS procedure can be used to update the UE's allowed CSG list. When the UE is in connected mode at a CSG cell and the CSG timer expires or the CSG is removed from the subscription data, the MME/SGSN/MSC shall perform S1/Iu release or handover procedure to avoid the UE continue to access the CSG cell. In this procedure, if the allowed CSG list in UE cannot be updated, the UE may reselect this CSG cell after it moves from the other cell. It is possible to be rejected by the network when it initiates NAS message. This will waste radio resources. It suggests that the S1/Iu release or handover procedure should indicate the UE to remove the corresponding CSG id from its locally stared allowed CSG list to avoid the asynchrony between UE and network.

In the CSG cell, the UE may make an emergency call in a "normal service" state or in a "limited service" state through the operator's network. The process of setting up an emergency call service is not restricted by the subscription relationship of the user. The UE in the "limited service" state may not use other services except making emergency calls. However, the UE in the "normal service" state may use other services in addition to making emergency calls.

### SUMMARY OF THE INVENTION

The objective of the present invention is to provide a method and network side device for managing CSG membership to solve the problem that the network side may not manage the CSG membership of the UE when the UE accesses the CSG cell in emergency mode.

To solve the above technical problem, the present invention provides the following technical solutions:

A method of managing CSG membership includes:
detecting, by a network side, a change of CSG membership of a UE when the UE camps on a CSG cell in emergency access mode and establishes a default bearer; and
when detecting the change of the CSG membership of the UE, triggering, by the network side, a Detach procedure between the network side and the UE by using an existing path between the network side and the UE, and indicating state information about the CSG membership of the UE, where the state information is used to instruct the UE to perform an operation with respect to the change of the CSG membership according to the state information.

Another embodiment of the present invention provides a network side device configured to implement the method mentioned above.

According to the technical solutions provided in embodiments of the present invention, the network side detects a change of CSG membership of a UE when the UE camps on a CSG cell and establishes a default bearer; and when detecting the change of the CSG membership of the UE, the network side triggers a Detach procedure between the network side and the UE by using an existing path between the network side and the UE, and indicates state information about the CSG membership of the UE, where the state information is used to instruct the UE to perform an operation with respect to the change of the CSG membership according to the state information. According to the embodiments of the present invention, after the UE accesses a CSG cell in emergency access mode and the CSG membership of the UE changes, the network side may manage the CSG membership of the UE by triggering a Detach procedure, ensuring that the UE may access the CSG cell again and manage the local ACL.

### BRIEF DESCRIPTION OF THE DRAWINGS

To make the technical solutions provided in embodiments of the present invention or the prior art clearer, the accompanying drawings for illustrating the embodiments of the present invention or the prior art are briefly described below. Apparently, the accompanying drawings are exemplary only, and persons skilled in the art may derive other drawings from such accompanying drawings without creative efforts.
FIG 1 is a flowchart of a method of managing CSG membership according to a first embodiment of the present invention;
FIG. 2A and FIG. 2B are a flowchart of attaching to a CSG cell by a UE according to an embodiment of the present invention;
FIG. 3 is a flowchart of initiating a Detach procedure by a network side according to an embodiment of the present invention;
FIG. 4A and FIG. 4B are a flowchart of initiating an Emergency Attach procedure by a UE according to an embodiment of the present invention;
FIG. 5 is a flowchart of a method of managing CSG membership according to a second embodiment of the present invention;
FIG. 6 is a flowchart of a method of managing CSG membership according to a third embodiment of the present invention;
FIG. 7 is a flowchart of a method of managing CSG membership according to a fourth embodiment of the present invention;
FIG. 8A and FIG. 8B are a flowchart of a method of managing CSG membership according to a fifth embodiment of the present invention;
FIG. 9 is a flowchart of a method of managing CSG membership according to a sixth embodiment of the present invention;
FIG. 10 is a flowchart of a method of managing CSG membership according to a seventh embodiment of the present invention;
FIG. 11 is a flowchart of a method of managing CSG membership according to an eighth embodiment of the present invention;
FIG. 12 is a block diagram of a system of managing CSG membership according to a first embodiment of the present invention;
FIG. 13 is a block diagram of a system of managing CSG membership according to a second embodiment of the present invention;
FIG. 14 is a block diagram of a network side device according to a first embodiment of the present invention;
FIG. 15 is a block diagram of a network side device according to a second embodiment of the present invention; and
FIG. 16 is a block diagram of a UE according to an embodiment of the present invention.

### DETAILED DESCRIPTION OF THE EMBODIMENTS

In the prior art, after accessing as a CSG member a cell in Close mode, a UE may use services provided by a CSG cell for CSG members. After the UE initiates an emergency call to the network side and sets up an emergency call connection, if the UE is notified that CSG membership is invalid, the UE deletes a corresponding CSG ID from its ACL. After that, if the CSG membership of the UE changes, the UE may not, by receiving a DM/OTA message sent by the network side, modify an ACL, change an access state, and access the CSG cell by using the CSG membership again, because the UE is in the emergency mode of the CSG cell for a long period, specifically, the network side may not manage the CSG membership of the UE.

Embodiments of the present invention provide a method, system, network side device, and UE for managing CSG membership. When the UE camps on a CSG cell and establishes a default bearer, the network side detects the change of the CSG membership of the UE, triggers a Detach procedure between the network side and the UE by using an emergency call path between the network side and the UE, and indicates state information about the CSG membership of the UE, where the state information is used to instruct the UE to perform an operation with respect to the change of the CSG membership of the UE according to the state information.

To help those skilled in the art better understand the technical solution of the present invention, and make the objective, features, and advantages of the present invention clearer for understanding, the following further describes the present invention with reference to accompanying drawings and exemplary embodiments.

The following describes the embodiments of the present invention with reference to interaction between an entity and a UE in an EPS network architecture. An EPS is categorized into E-UTRAN (Evolved Universal Terrestrial Radio Access Network) and EPC. An E-UTRAN includes an eNB (E-UTRAN NodeB). The eNB transmits and receives radio signals, and communicates with a UE by using an air interface. An EPC includes an HSS, an MME (Mobility Management Entity, MME), an S-GW (Serving Gateway, S-GW), and a P-GW (PDN Gateway, P-GW). The HSS is a place which permanently stores UE subscription data, and is deployed on the home network subscribed to by the UE. The MME stores the UE subscription data on the current network, and is responsible for managing NAS (Non-Access Stratum) signaling from the UE to the network, managing the tracking and paging functions of the UE in idle mode, and managing bearers. The S-GW is a gateway from a core network to a wireless system, and is responsible for bearing the data on a user plane from the UE to the core network, buffering the data of the UE in idle mode, and implementing functions of initiating a Service Request by the network side, lawful interception, data packet routing and forwarding. The P-GW is a gateway between an evolved packet system (EPS) and an external network and performs functions of IP address allocation, charging support, packet filtering, and policy enforcement.

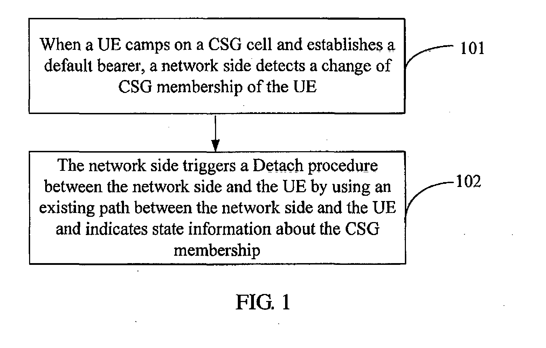

FIG. 1 is a flowchart of a method of managing CSG membership according to the first embodiment of the present invention.

S101: When a UE camps on a CSG cell and establishes a default bearer, a network side detects a change of CSG membership of the UE.

Before detecting the change of the CSG membership of the UE, the network side receives a Detach Request message sent by the UE.

The UE may camp on the CSG cell in emergency access mode. Specifically, the UE is not a CSG member, and camps on the CSG cell by sending an emergency access request to the network side; or the UE is a CSG member, accesses the CSG cell as the CSG member, and camps on the CSG cell by sending an emergency access request to the network side after the CSG membership of the UE changes and the UE detaches from the network side.

S102: The network side triggers a Detach procedure between the network side and the UE by using an existing path between the network side and the UE, and indicates state information about the CSG membership of the UE, where the state information is used to instruct the UE to perform an operation with respect to the change of the CSG membership according to the state information.

The indicating state information about the CSG membership of the UE includes: indicating that the CSG membership of the UE changes, or indicating that the CSG membership of the UE is invalid, or indicating that the CSG membership of the UE is valid.

The triggering a Detach procedure between the network side and the UE by the network side may include:
sending, by the MME on the network side, a Detach message to the UE, where the Detach message carries information indicating the change of the CSG membership and notification information instructing the UE not to access the network side again, and the information indicating the change of the CSG membership is used to instruct the UE to update a local ACL according to a CSG ID of a CSG cell where the UE currently camps; and retaining, by the network side, the default bearer between the network side and the UE, and maintaining the state of the default bearer to "emergency"; or
sending, by the MME on the network side, a Detach message to the UE, where the Detach message carries information indicating the change of the CSG membership, notification information instructing the UE not to access the network side again, and notification information instructing the UE to change the access state, and the information indicating the change of the CSG membership is used to instruct the UE to update a local ACL according to the CSG ID of a CSG cell where the UE currently camps; and retaining, by the network side, the default bearer between the network side and the UE, changing the state of the default bearer to "normal", and changing the access state of the UE from "emergency" to "normal"; or
sending, by the MME on the network side, a Detach message to the UE, where the Detach message carries information indicating the change of the CSG membership and notification information instructing the UE to access the network side again, and the information indicating the change of the CSG membership is used to instruct the UE to maintain a local ACL according to the CSG ID of a CSG cell where the UE currently camps; and updating, by the network side, the default bearer between the network side and the UE, and after the UE accesses the network side again according to the notification information, changing the access state of the UE from "emergency" to "normal", and reusing an updated bearer; or
sending, by the MME on the network side, a Detach message to the UE, where the Detach message carries information indicating the change of the CSG membership and notification information instructing the UE to access the network side again, and the information indicating the change of the CSG membership is used to instruct the UE to maintain a local ACL according to the CSG ID of a CSG cell where the UE currently camps; and releasing, by the network side, the default bearer between the network side and the UE, changing the access state of the UE from "emergency" to "normal", and reestablishing a default bearer between the network side and the UE after the UE accesses the network side again according to the notification information; or
sending, by the MME on the network side, a Detach message to the UE, releasing the default bearer between the network side and the UE, and receiving a Service Request message sent by the UE, the Service Request message being a message that the UE sends when the UE does not receive the Detach message and needs to initiate a service; sending a Service Request Reject message to the UE, the Service Request Reject message carrying information indicating the change of the CSG membership and notification information instructing the UE to access the network side again, and the information indicating the change of the CSG membership is used to instruct the UE to maintain a local ACL according to the CSG ID of a CSG cell where the UE currently camps.

An HSS on the network side may trigger the MME to send the Detach message to the UE.

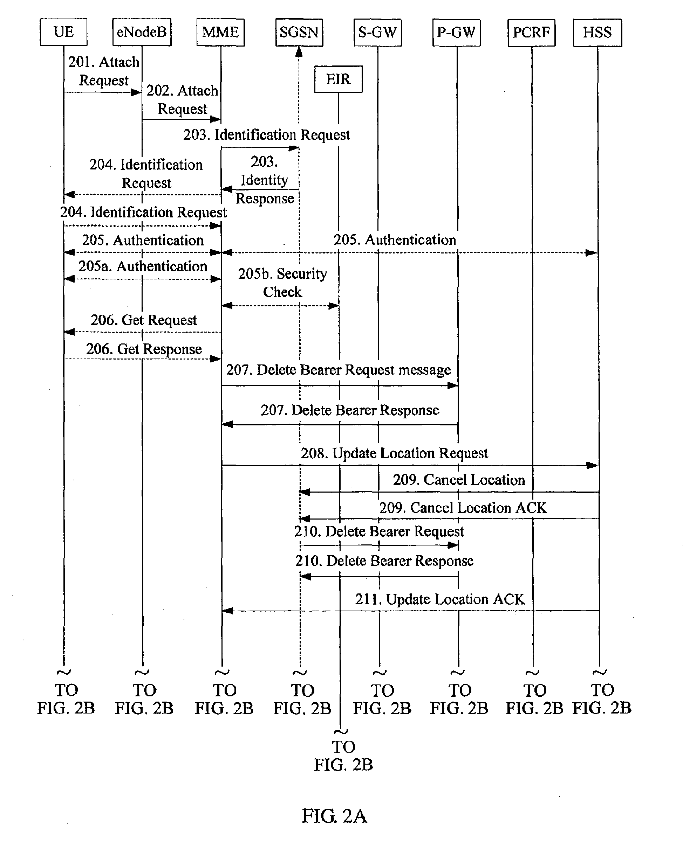

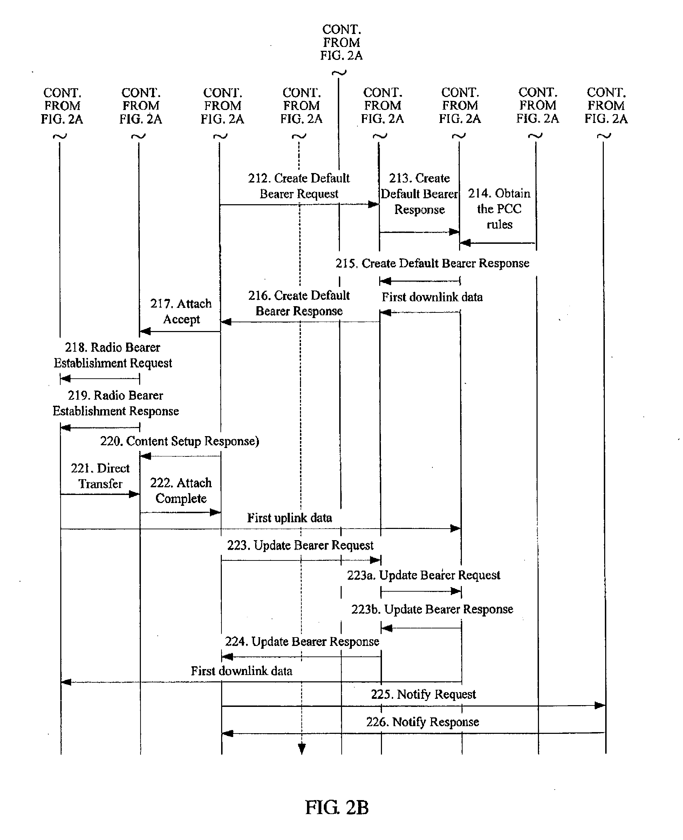

FIG. 2A and FIG. 2B are a flowchart of attaching to a cell in Closed mode by a UE as a CSG member according to an embodiment of the method of managing CSG membership.

S201. The UE initiates an Attach Request message (Attach Request) and a network selection indication to an eNB. The Attach Request message may include the IMEI (International Mobile Equipment Identity, IMEI), S-TMSI (Temporary Mobile Subscriber Identity, TMSI), and network capability of the UE, and PDN address allocation. In this embodiment, for consistency with a universal procedure, an eNB is used to replace the eNB in Closed mode.

S202: The eNB obtains the MME according to the S-TMSI and network selection indication. If the MME is not obtained, a new MME is selected by using a selection function and then the eNB forwards the Attach Request message to the new MME.

S203: If the UE identifies itself according to the S-TMSI and the UE detaches from the MME, the new MME sends an Identification Request (Identification Request) message to an old MME for requesting the IMEI, and the old MME returns the IMEI and authentication.

S204: If the UE does not know the old MME and the new MME, the new MME sends an Identification Request message to the UE for requesting the IMSI of the UE, and the UE returns an IMSI through an Identity Response message.

S205: If no context of the UE exists on the network, the UE is authenticated forcedly.

If the context of the UE exists on the network, this step is optional (including step S205a and step S205b).

S206: If the UE sets an encrypted PCO and/or APN Transfer flag in the Attach Request message, the MME retrieves, from the UE, protocol configuration options (Protocol Configuration Options) and/or APN.

S207: If the new MME has an activated bearer context (if the UE is not detached from the MME, the UE attaches to the same MME again), a Delete Bearer Request message is sent to a P-GW to delete the old bearer context of the GW.

S208: If the MME changes or the UE attaches to the MME for the first time, the MME sends an Update Location Request (Update Location Request) message to the HSS.

S209: The HSS cancels the old location of the MME and cancels the MME and the bearer context.

S210: The HSS sends an Insert Subscriber Data message to the MME. The data includes the default APN and all the lists of AMBRs of the PDN that may be used by the UE. The new MME exists in a new TA. If the UE is not allowed to attach to the TA due to area restriction or access restriction, the MME rejects the Attach Request; if the UE is allowed to attach to the TA, the new MME creates a bearer context for the UE and returns an Acknowledgement message to the HSS.

S211: The HSS returns an Update Location ACK message (Update Location ACK). If the HSS rejects the Update Location ACK message, the new MME also rejects the Attach Request.

S212: The new MME selects an S-GW and sends a Default Bearer Request message (Default Bearer Request) for creating a default bearer to the S-GW.

S213: The S-GW creates an entry in its EPS bearer list, and sends a Default Bearer Request to the PGW. After this step is performed, the SGW buffers downlink packet data received from the P-GW until a message after step S2021 is received.

S214: If a PCRF is used on the network, the PGW interacts with the PCRF to obtain a PCC rule of the UE. This may lead to the establishment of a number of dedicated bearers.

Assume that an RAT type is provided by the PGW to the PCRF through a previously received message. If the PGW/PCRF is to be configured to activate a PCC rule preset for the default bearer, the PGW does not need to interact with the PCRF.

S215: The P-GW returns a Create Default Bearer Response message to the S-GW.

S216: The S-GW returns a Create Default Bearer Response message to the MME,

S217: The new MME sends an Attach Accept message to the eNodeB. If the new MME allocates a new S-TMSI, the new S-TMSI is also included in the Attach Accept message. The Attach Accept message may be included in an S1_MME control message. The S1_MME control message also includes the security context of the UE, a handover restriction list, a bearer QoS parameter, the PDN address information associated with AMBR, and QoS information needed to establish the bearer. In addition, the PDN address information, if allocated by the PGW, may also be included in the message.

S218: The eNodeB sends a Radio Bearer Establishment Request message (Radio Bearer Establishment Request) to the UE, and meanwhile sends an Attach Accept message (the message includes the S-TMSI, PDN address, TA List, and PDN Address information).

S219: The UE sends a Radio Bearer Establishment Response message (Radio Bearer Establishment Response) to the eNodeB, and carries an Attach Complete message in the message.

S220: The eNodeB forwards the Attach Complete message to the new MME. At an S1_MME reference point, the Attach Complete message is included in a control plane message "Initial Context Setup Complete". The S1 control plane message also includes the TEID of the eNodeB and the address of the eNodeB used for downlink traffic at a S1_U reference point. The new MME returns an Initial Content Setup Response message to the eNodeB.

After receiving the Attach Accept message and obtaining one piece of PDN address information, the UE may transmit uplink data packets to the eNodeB, and the eNodeB transmits the data packets to the S-GW and the P-GW.

S221: The UE sends a Direct Transfer message (Direct Transfer) to the eNodeB. The Direct Transfer message includes the Attach Complete message (Attach Complete). By using the Attach Complete message, the UE starts using a NAS security algorithm designated by the MME.

S222: The eNodeB forwards the Attach Complete message to the new MME through an Uplink NAS Transport message.

S223: The new MME sends an Update Bearer Request message (Update Bearer Request) to the S-GW.

S223a: If the Update Bearer Request message in step S223 includes Handover Indication information, the S-GW sends an Update Bearer Request message to the PDN GW to instruct the PDN GW to transmit non-3GPP-compliant packets to a 3GPP access system by using a tunnel, and immediately routes packets over the established default and dedicated EPS bearers to the S-GW.

S223b: The PDN GW acknowledges by sending an Update Bearer Response message (Update Bearer Response) to the S-GW.

S2024: The S-GW acknowledges by sending an Update Bearer Response message to the new MME, and then the S-GW may transmit buffered downlink data packets.

S225: In step S222, after the MME receives the Update Bearer Response message, if an Attach type does not indicate a handover, and meanwhile one EPS bearer has been established, the user's subscription relationship indicates that the user is allowed to perform non-3GPP access, and the MME selects a PDN GW whose address is different from the PDN GW address indicated in the PDN subscription context in the HSS, the MME sends a Notify Request message (Notify Request) including the APN and the address of the P-GW to the HSS for non-3GPP access mobility.

S226: The HSS stores the address of the P-GW and sends a Notify Response message (Notify Response) to the MME.

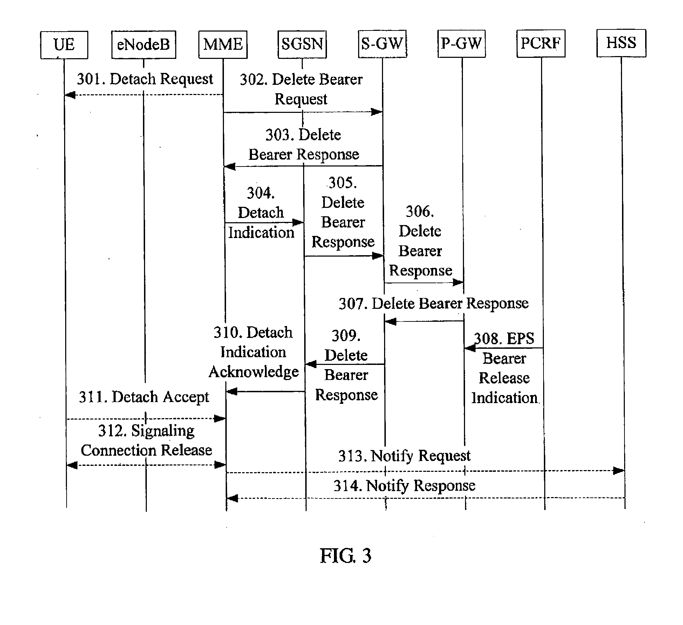

A UE accesses a CSG cell as a CSG member in Closed mode, and uses services provided in the CSG cell. After a period of time, if the CSG membership changes or the CSG membership is invalid, the UE is no longer the CSG member of the CSG cell. In this case, an HSS on the network side notifies the MME of the change of the CSG membership. Optionally, the UE is notified of the change of the CSG membership in OMA DM or OTA mode, and the local ACL of the UE may be modified so that the UE does not attempt again to access the CSG cell by using the CSG ID before the change of the CSG membership to reduce resource consumption. After knowing the change of the CSG membership of the UE, the MME attempts to hand over the UE to another CSG cell. If no appropriate CSG cell is available, the MME initiates a Detach procedure. FIG. 3 is a flowchart of initiating a Detach procedure by a network side after knowing the change of CSG membership of the UE according to an embodiment of the method of managing CSG membership.

S301: If the CSG membership of the UE stored on the MME changes, or the CSG membership of the UE has expired, the UE is not allowed to camp on the CSG cell. The MME initiates a Detach procedure, that is, the MME sends a Detach Request message (Detach Request) to the UE. In this embodiment, the Detach Request message initiated by the MME carries No. 25 error information.

S302: Any valid EPS bearer of the UE in the S-GW becomes invalid after the MME sends a Delete Bearer Request message (Delete Bearer Request) to the S-GW.

S303: If the ISR is activated, the S-GW deactivates the ISR, releases the MME associated with the EPS bearer, and acknowledges with a Delete Bearer Response message (Delete Bearer Request). If the ISR is not activated, step S306 is performed (step S304 and step S305 are ignored) and step S303 is performed after step S307.

S304: If the ISR is activated, the MME sends a Detach Indication message (Detach Indication) to an associated SGSN, and indicates in a Cause field that the Detach is a partial or global Detach.

S305: If the Cause field indicates that the Detach is a global Detach, the SGSN sends a Delete Bearer Request message (Delete Bearer Request) to the S-GW. If the Cause field specifies that the Detach is a partial Detach, the SGSN deactivates the ISR and therefore step S305 and step S309 are ignored.

S306: The S-GW sends a Delete Bearer Request to the P-GW. If the ISR is not activated, this step is triggered by step S302.

S307: The P-GW acknowledges with a Delete Bearer Response message (Delete Bearer Response).

S308: The P-GW interacts with the PCRF to notify the PCRF that the EPS bearer is released.

S309: The S-GW acknowledges with a Delete Bearer Response message.

S310: The SGSN acknowledges by sending a Detach Indication Acknowledge message to the MME.

S311: If the UE receives the Detach Request message from the MME in the first step, the UE sends a Detach Accept message to the MME at any time after the first step.

S312: Upon receiving the Detach Accept message, if a Detach type does not require the UE to perform a new Attach procedure, the MME issues an S1 release command (with a cause being Detach) to the eNodeB to release an S1-MME signaling connection.

S313: The MME sends a Notify Request message (Notify Request) to the HSS for non-3GPP access mobility.

S314: The HSS sends a Notify Response message (Notify Response) to the MME.

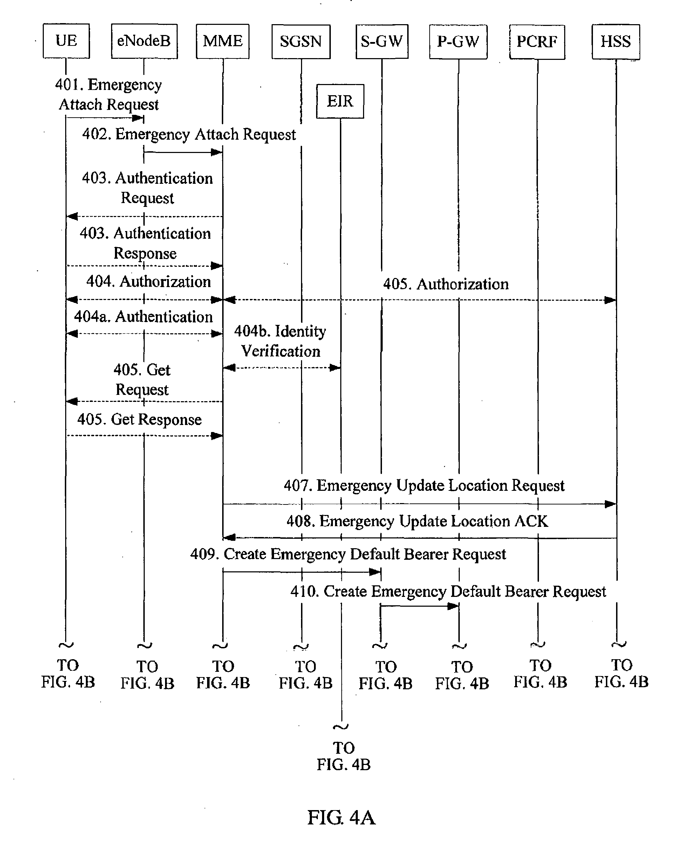

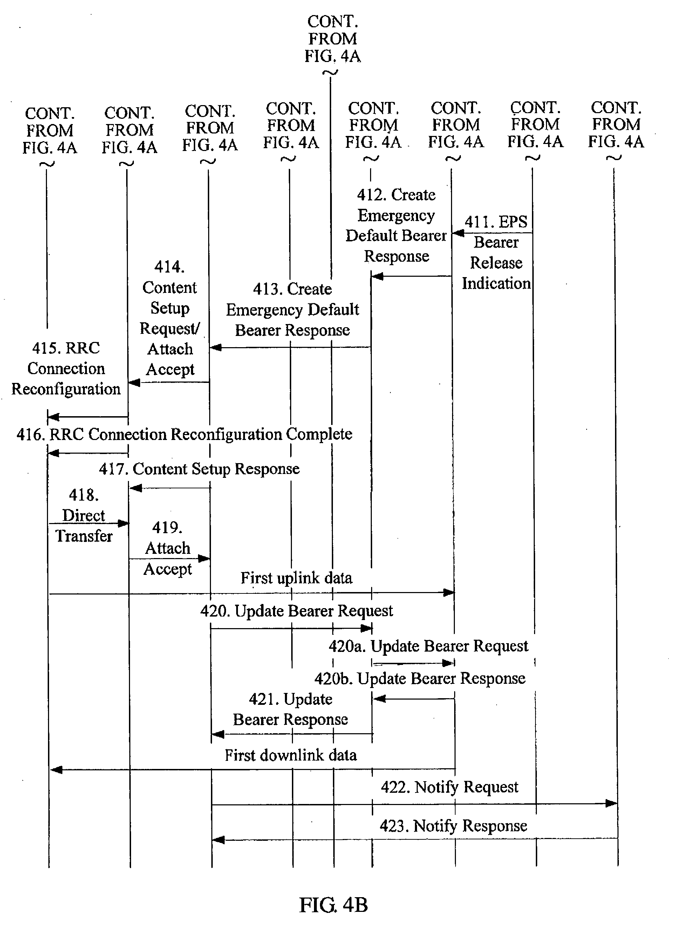

Upon receiving a Detach message, the UE enters the "limited service" state and deletes the CSG ID of a CSG cell from its local ACL according to a Detach result so as to indicate that the UE is not a member of the CSG cell identified by the deleted CSG ID and therefore in subsequent procedures, the UE does not initiate a member access request in the CSG cell, so that resource consumption and useless access attempts are reduced. Meanwhile, the UE attempts to search for an appropriate cell on the same PLMN. On the current PLMN, if no appropriate cell is available for the UE to camp on, the UE may initiate an Emergency Attach procedure to use the emergency service provided by the network. FIG. 4A and FIG. 4B are a flowchart of initiating an Emergency Attach procedure by a network side according to an embodiment of the method of managing CSG membership.

S401: The UE sends an Emergency Attach Request message (Emergency Attach Request) to an eNB according to its "limited service" state. An Attach Type field in the message carries information "Emergency Attach", and may optionally carry identification information such as the IMSI and IMEI of the UE.

S402: The eNB selects an appropriate MME and forwards the Emergency Attach Request message to a selected MME.

S404-S406: The identity retrieval, authentication, and encryption are performed according to the data carried by the UE. These are optional steps for the UE performing an Emergency Attach procedure, which are not detailed here.

S407: If the UE carries enough information that may identify itself, the MME may act for the UE to update a location area or tracking area and send an Emergency Update Location Request message (Emergency Update Location Request). In this case, this step may also be optional.

S408: The HSS, in response to the update of the location or tracking area, sends an Emergency Update Location ACK message (Emergency Update Location ACK). In this case, this step may also be optional.

S409: According to the Emergency Attach Request message sent by the UE and a request for establishing a default bearer implied in the Emergency Attach Request message, the MME uses parameters in its emergency configuration data (Emergency Configuration Data) to select a P-GW for the UE and establish an emergency bearer.

S410-S412: The PDN-GW, according to the request for establishing an emergency default bearer according to an SGW, interacts with a PCRF and establishes a required default bearer.

S413: Establish the emergency default bearer successfully.

S414-S419: Allocate radio links and resources after the UE attaches to the MME.

S420-S421: Update the bearer.

S422-S423: Perform notify procedure between the MME and the HSS.

FIG. 2-4 describe procedures for entering the "emergency service" state by a UE, which are the same as the existing technical solution. It should be noted that the UE in the CSG cell enters the "emergency" state in two scenarios. In one scenario, the UE is not a CSG member and accesses the CSG cell by initiating an Emergency Attach message; therefore, the procedures illustrated in FIG. 4A and FIG. 4B need to be performed. In the other scenario, the UE is a CSG member, but the CSG membership changes or has expired during the process of using a service; therefore the network side is triggered to perform an Attach procedure again, and as a result, procedures illustrated in FIGS. 2-4 need to be performed.

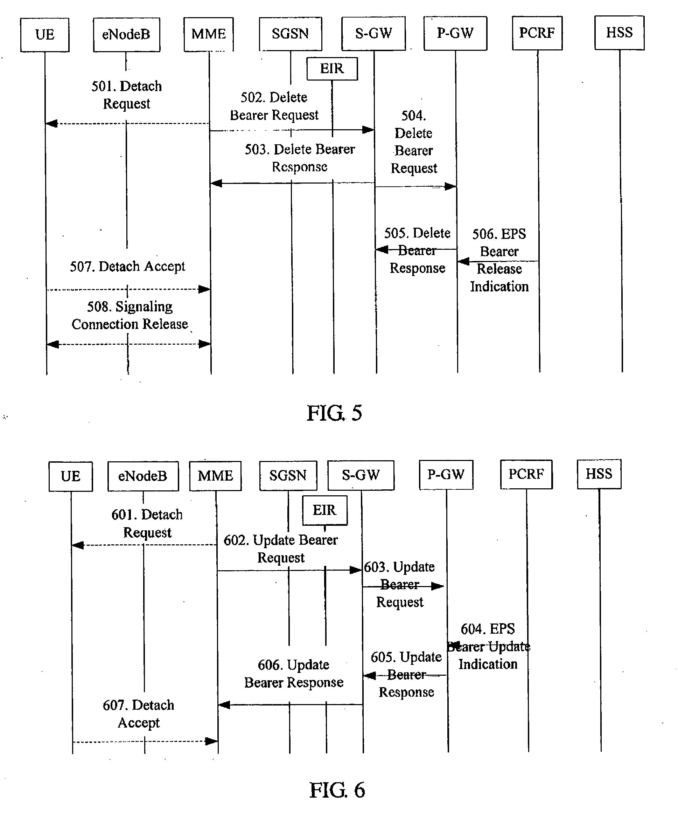

When a UE is in the "emergency service" state, a network side may sense the state of the UE. When the CSG membership of the UE changes, an HSS notifies an MME that the CSG membership of the UE changes. Because the UE may not notify the UE of the state change mentioned above in OMA DM/OTA mode, the network side sends a Detach message to the UE according to the information about the current state of the UE, where the Detach message carries the CSG ID of the CSG cell where the CSG membership changes. After receiving the Detach message, the UE updates the local ACL. FIG. 5 shows a process of updating a local ACL by the UE according to a Detach message sent by an MME according to the second embodiment of the method of managing CSG membership.

S501: When the CSG membership of the UE stored in the HSS or MME changes from non-membership to membership, the MME needs to change the state of the UE from "non-membership emergency" to "normal", and modify the information about an ACL locally stored by the UE. The MME determines, according to the CSG membership and current attach state of the UE, whether to manage the CSG membership of the UE. If the CSG membership of the UE in the "emergency" state needs to be changed, the MME sends a Detach message to the UE, where the Detach message indicates that the Detach cause is CSG Authorization Allowed, and carries a related cause state code. Optionally, a No. 28 state code may be used. The objective of the Detach procedure is to change the CSG membership of the UE and maintain the current state of the UE. Therefore, the Detach Type IE Indicator is set to "re-attach not required" so that the UE, after the Detach procedure is complete, maintains the "emergency" state and does not initiate a new Attach Request message. The MME may not carry in the Detach Request message the CSG ID, identified by which the CSG membership changes. The MME performs the Detach procedure on the UE camping on a CSG cell in an emergency case, and indicates that the CSG membership of the UE camping on the CSG cell identified by the CSG ID changes. Therefore, if no information about the CSG ID is carried, in this embodiment, it is considered by default that the CSG membership of the CSG cell where the Detach procedure is initiated changes.

The following table shows a format of the Detach Request message (Detach Request).

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Detach request message identity | Message type | M | V | 1 |
| | | 9.8 | | | |
| | Detach type | Detach type | M | V | 1/2 |
| | | 9.9.3.7 | | | |
| | Spare half octet | Spare half octet | M | V | 1/2 |
| | | 9.9.2.9 | | | |
| 53 | EMM cause | EMM cause | O | TV | 2 |
| | | 9.9.3.9 | | | |

In the above table, the Protocol Discriminator and Security Header type are universal header fields, which are defined in 3GPP TS 24.007.

"The Detach Request Message Identity" is composed of Message Type and is one octet in length. The following table shows the message types defined by Message Type. In this embodiment, the Attach Request type may be set to Detach Request.

| Bits | | | | | | | | | |
|---|---|---|---|---|---|---|---|---|---|
| 8 | 7 | 6 | 5 | 4 | 3 | 2 | 1 | | |
| | | | | | | | | | |
| 0 | 1 | - | - | - | - | - | - | | EPS mobility management messages |
| 0 | 1 | 0 | 0 | 0 | 0 | 0 | 1 | | Attach request |
| 0 | 1 | 0 | 0 | 0 | 0 | 1 | 0 | | Attach accept |
| 0 | 1 | 0 | 0 | 0 | 0 | 1 | 1 | | Attach complete |
| 0 | 1 | 0 | 0 | 0 | 1 | 0 | 0 | | Attach reject |
| 0 | 1 | 0 | 0 | 0 | 1 | 0 | 1 | | Detach request |
| 0 | 1 | 0 | 0 | 0 | 1 | 1 | 0 | | Detach accept |

The Detach Type is composed of Detach Type, and is a half octet in length. The following table shows a format of the information in the Detach Type according to this embodiment.

| 8 | 7 | 6 | 5 | | 4 | 3 | | 2 | 1 | |
|---|---|---|---|---|---|---|---|---|---|---|
| Detach type IEI | | | | Switch off | | | Type of detach | | | octet 1 |

The following table shows the values for the least significant bits of the octet. The value taken in this embodiment is "Re-attach not Required".

| In the network to UE direction: | | | | |
|---|---|---|---|---|
| Bits | | | | |
| **3** | **2** | **1** | | |
| 0 | 0 | 1 | | re-attach required |
| 0 | 1 | 0 | | re-attach not required |
| 0 | 1 | 1 | | IMSI detach |
| 1 | 1 | 0 | | reserved |
| 1 | 1 | 1 | | reserved |
| | | | | |
| All other values are interpreted as "re-attach not required" in this version of the protocol. | | | | |

The following table shows the format of the Switch off field. The value for this field is 1. That is, the "emergency" state is maintained.

| In the network to UE direction: | | | | |
|---|---|---|---|---|
| Bit | | | | |
| 4 | | | | |
| 0 | | | | normal detach |
| 1 | | | | No detach Needed |

The Spare half octet is a half octet in length, which is to pad zeros to Type 1 IE having odd values. The EMM cause field is two octets in length. The following table shows the values for the EMM Cause field.

| 8 | 7 | 6 | 5 | 4 | 3 | 2 | 1 | |
|---|---|---|---|---|---|---|---|---|
| EMM cause IEI | | | | | | | | octet 1 |
| Cause value | | | | | | | | octet 2 |

The following table shows the values for the EMM Cause field.

| | | | | | | | | | |
|---|---|---|---|---|---|---|---|---|---|
| 0 | 0 | 0 | 1 | 1 | 0 | 0 | 1 | | Not authorized for this CSG |
| 0 | 0 | 0 | 1 | 1 | 0 | 1 | 0 | | Non-EPS authentication unacceptable |
| 0 | 0 | 0 | 1 | 1 | 1 | 0 | 0 | | CSG Authorization Allowed |

S502: Any valid EPS bearer of the UE in the S-GW becomes invalid after the MME sends a Delete Bearer Request message (Delete Bearer Request) to the S-GW to make the EPS bearer invalid.

S503: Acknowledge with a Delete Bearer Response message.

S504: The S-GW sends a Delete Bearer Request to a P-GW.

S505: The P-GW acknowledges with a Delete Bearer Response message.

S506: The P-GW interacts with a PCRF to notify the PCRF that the EPS bearer is released.

S507: If the UE receives the Detach Request message from the MME in step S501, the UE sends a Detach Accept message (Detach Accept message) to the MME at any time after step S501. The UE, according to the CSG cell where the Detach Request is received, adds the CSG ID of the CSG cell to the ACL of the UE, or changes the ACL state of the UE to "valid" with respect to an existing CSG ID.

S508: After receiving the Detach Accept message, if the Detach Type does not require the UE to perform a new Attach procedure but instructs the UE to perform the Detach procedure, the MME issues an S1 release command (with the cause being Detach) to an eNodeB to release the S1-MME signaling connection. In this embodiment, if another Attach procedure is not required but the current "emergency" state is required to be maintained, the CSG membership is sent to the UE, and the connection does not need to be released. Therefore, the current "emergency" state is still maintained, and subsequent signaling procedures are ignored.

According to the above embodiment, after the UE initiates an Emergency Attach procedure, the CSG membership of the UE changes, and the MME triggers a Detach procedure, indicating that the Detach cause is the change of the CSG membership and instructing the UE not to access the network again. After receiving the Detach message, the UE maintains the local ACL and does not initiate another Attach procedure. The bearer between the UE and the MME, and the state of the UE are not changed during the Detach procedure. The Detach message is for notification only.

FIG 6 shows a process of updating a local ACL and changing the call state by a UE according to a Detach message sent by an MME according to the third embodiment of the method of managing CSG membership.

In this embodiment, the MME specifies that the Detach procedure is used to notify the UE that the CSG membership of the UE changes so that the CSG membership of the UE in the "emergency" state is managed. In addition, the UE may use a normal service without initiating an Attach or Create Bearer procedure. The prerequisite is the same as that for procedures illustrated in FIG. 2-4. To be specific, when the UE is in the "emergency service" state, the network may sense the state of the UE; when the CSG membership of the UE changes, the HSS notifies the MME that the CSG membership of the UE changes. However, in the "emergency" state, the network side may not notify the UE of the above state change in OMA DM/OTA mode, and therefore the network side sends a Detach message to the UE according to information about the current state of the UE, where the Detach message carries the CSG ID of the CSG cell where the CSG membership changes. The UE does not need to initiate another Attach procedure, and the network side changes the connection state. In this way, the UE may access the network normally and use the service provided by the network only by initiating a normal Service Request (Service Request) message. After receiving the Detach message, the UE updates the local ACL. The prerequisite for implementing this embodiment is as follows: During the Emergency Attach procedure, optional access procedures such as authentication and authorization have been implemented successfully and the network side has performed the normal access procedure. The state of the default bearer on the network is set to "emergency" only because the UE is not a CSG member. Therefore, the service may be used by using an existing connection when the network side and UE change their state respectively in the case of the change of the CSG membership. The detailed steps are as follows:

S601: This step is the same as that described in the embodiment illustrated by FIG. 5. To be specific, the MME needs to send a Service Request message by using a Detach Request message (Detach Request) and carry information indicating the change of the CSG membership in the Detach Request message and information instructing the UE not to access the network side again.

The following table shows the format of the Detach Request message.

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Detach request message identity | Message type | M | V | 1 |
| | | 9.8 | | | |
| | Detach type | Detach type | M | V | 1/2 |
| | | 9.9.3.7 | | | |
| | Spare half octet | Spare half octet | M | V | 1/2 |
| | | 9.9.2.9 | | | |
| 53 | EMM cause | EMM cause | O | TV | 2 |
| | | 9.9.3.9 | | | |

In the above table, Protocol Discriminator and Security Header type are universal header fields, which are defined in 3GPP TS 24.007.

The Detach Request Message Identity is composed of Message Type and is one octet in length. The following table shows the message types defined by Message Type. In this embodiment, Message Type is set to Detach Request.

| Bits | | | | | | | | | |
|---|---|---|---|---|---|---|---|---|---|
| 8 | 7 | 6 | 5 | 4 | 3 | 2 | 1 | | |
| | | | | | | | | | |
| 0 | 1 | - | - | - | - | - | - | | EPS mobility management messages |
| | | | | | | | | | |
| 0 | 1 | 0 | 0 | 0 | 0 | 0 | 1 | | Attach request |
| 0 | 1 | 0 | 0 | 0 | 0 | 1 | 0 | | Attach accept |
| 0 | 1 | 0 | 0 | 0 | 0 | 1 | 1 | | Attach complete |
| 0 | 1 | 0 | 0 | 0 | 1 | 0 | 0 | | Attach reject |
| 0 | 1 | 0 | 0 | 0 | 1 | 0 | 1 | | Detach request |
| 0 | 1 | 0 | 0 | 0 | 1 | 1 | 0 | | Detach accept |

The Detach Type is a half octet in length. The following table shows the format of the Detach Type according to this embodiment

| 8 | 7 | 6 | 5 | | 4 | 3 | | 2 | 1 | |
|---|---|---|---|---|---|---|---|---|---|---|
| Detach type IEI | | | | Switch off | | | Type of detach | | | octet 1 |

The following table shows the values for the least significant bits of the octet.

| In the network to UE direction: | | | | |
|---|---|---|---|---|
| Bits | | | | |
| **3** | **2** | **1** | | |
| 0 | 0 | 1 | | re-attach required |
| 0 | 1 | 0 | | re-attach not required |
| 0 | 1 | 1 | | IMSI detach |
| 1 | 1 | 0 | | CSG change Notify |
| 1 | 1 | 1 | | reserved |
| | | | | |
| All other values are interpreted as "re-attach not required" in this version of the ocol. | | | | |

The following table shows the value for the Switch off field.

| In the UE to network direction: | | | | |
|---|---|---|---|---|
| Bit | | | | |
| **4** | | | | |
| 0 | | | | normal detach |
| 1 | | | | switch off |
| | | | | |
| In the network to UE direction bit 4 is spare. The network shall set this bit to zero. | | | | |

The Spare half octet is a half octet in length, which is to pad zeros to Type 1 IE having odd values. The EMM cause field is two octets in length. The following table shows the values for the EMM Cause field.

| 8 | 7 | 6 | 5 | 4 | 3 | 2 | 1 | |
|---|---|---|---|---|---|---|---|---|
| EMM cause IEI | | | | | | | | octet 1 |
| Cause value | | | | | | | | octet 2 |

The following table shows the values for the EMM Cause field.

| | | | | | | | | | |
|---|---|---|---|---|---|---|---|---|---|
| 0 | 0 | 0 | 1 | 1 | 0 | 0 | 1 | | Not authorized for this CSG |
| 0 | 0 | 0 | 1 | 1 | 0 | 1 | 0 | | Non-EPS authentication unacceptable |
| 0 | 0 | 0 | 1 | 1 | 1 | 0 | 0 | | CSG Authorization Allowed |

S602: The MME sends an Update Bearer Request message (Update Bearer Request) to an SGW and changes the state of the default bearer of the UE from "emergency" to "normal".

S603: The S-GW sends an Update Bearer Request message (Update Bearer Request) to a P-GW.

S604: The P-GW interacts with the PCRF to notify the PCRF that the EPS bearer is updated.

S605: The P-GW acknowledges with an Update Bearer Response message (Update Bearer Response).

S606: The S-GW acknowledges with an Update Bearer Response message.

S607: If the UE receives the Detach Request message from the MME in step S601, the UE sends a Detach Accept message to the MME at any time after step S601. The UE, according to the CSG cell where the Detach Request is received, adds the CSG ID of the CSG cell to the ACL of the UE, or changes the ACL state of the UE to "valid" if the CSG ID of the CSG cell already exists.

After the Detach Accept message is received, if the Detach Type does not require the UE to initiate another Attach procedure but requires the UE to maintain its current state, the MME may not implement other action but only notifies the UE of the change of the CSG membership by using the Detach message. In this case, because state information of the connection between the UE and the network side changes from "emergency" to "normal", the UE may not initiate another Attach procedure, but may use the service provided by the network only by initiating a normal Service Request message.

According to the above embodiment, after the UE initiates an Emergency Attach procedure, the CSG membership of the UE changes. The MME triggers a Detach procedure, reserves the bearer, and changes the bearer state to "normal". Then the MME sends a Detach message, where the Detach message carries information indicating that the Detach cause is the change of the CSG membership and notification information instructing the UE not to access the network again but to change its state. After receiving the Detach message, the UE maintains the local ACL.

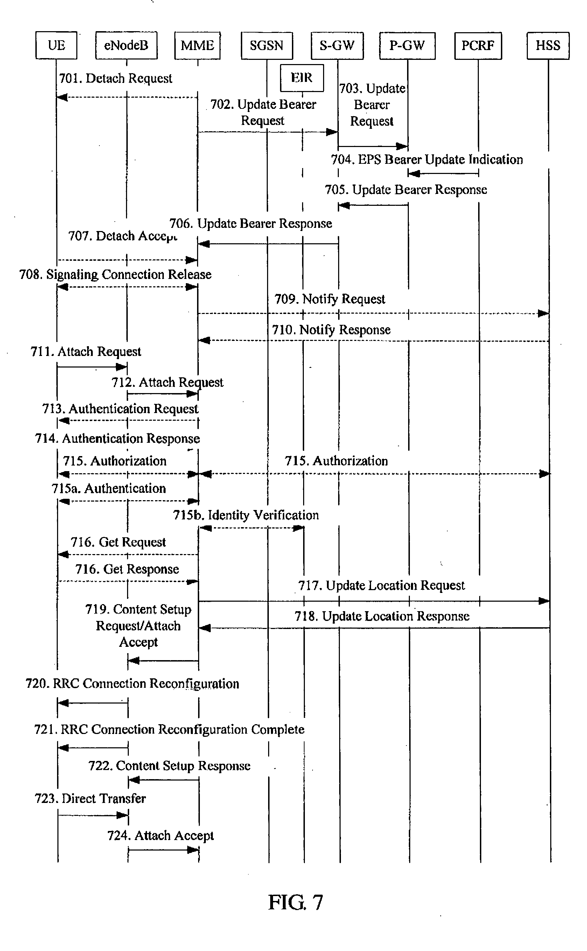

FIG. 7 shows a process of initiating a new Attach call and maintaining a local ACL by the UE according to a Detach message sent by an MME according to the fourth embodiment of the method of managing CSG membership.

In this embodiment, the MME specifies that the Detach message is used to notify the UE that the CSG membership of the UE changes so that the CSG membership of the UE in the "emergency" state is managed. In addition, the UE may use the normal service after initiating an Attach procedure again, without initiating a Create Bearer procedure. The prerequisite is the same as that for procedures illustrated in FIG. 2-4. To be specific, when the UE is in the "emergency service" state, the network may sense the state of the UE; when the CSG membership of the UE changes, the HSS notifies the MME that the CSG membership of the UE changes. However, in the "emergency" state, the network side may not notify the UE of the above state change in OMA DM/OTA mode, and therefore the network side sends a Detach message to the UE according to information about the current state of the UE, where the Detach message carries the CSG ID of the CSG cell where the CSG membership changes and the information instructing the UE to initiate another Attach procedure. In this case, the UE needs to initiate another Attach procedure, and the network side changes the connection state but does not need to establish a new bearer for the UE later. In this way, the UE may access the network normally and use the service provided by the network only by initiating a normal Service Request message. During an ACL update procedure directed to the CSG ID, the UE may, after receiving the Attach message, update the local ACL; or when performing a new Attach procedure by using the CSG ID, the UE may also update the local ACL according to an Attach result. If the ACL is updated successfully, the CSG ID is added to the local ACL; otherwise, the CSG ID is not changed. The specific steps are as follows:

S701: This step is the same as that described in the embodiment illustrated by FIG. 5. To be specific, the MME needs to send a Service Request message by using a Detach Request message (Detach Request) and carry information indicating the change of the CSG membership in the Detach Request message and information instructing the UE to access the network again.

The following table shows the format of the Detach Request message.

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Detach request message city | Message type | M | V | 1 |
| | | 9.8 | | | |
| | Detach type | Detach type | M | V | 1/2 |
| | | 9.9.3.7 | | | |
| | Spare half octet | Spare half octet | M | V | 1/2 |
| | | 9.9.2.9 | | | |
| 53 | EMM cause | EMM cause | O | TV | 2 |
| | | 9.9.3.9 | | | |

In the above table, Protocol Discriminator and Security Header type are universal header fields, which are defined in 3GPP TS 24.007.

The Detach Request Message Identity is composed of Message Type and is one octet in length. The following table shows the message types defined by Message Type. In this embodiment, Message Type is set to Detach Request.

| Bits | | | | | | | | | |
|---|---|---|---|---|---|---|---|---|---|
| 8 | 7 | 6 | 5 | 4 | 3 | 2 | 1 | | |
| | | | | | | | | | |
| 0 | 1 | - | - | - | - | - | - | | EPS mobilitv management messages |
| | | | | | | | | | |
| 0 | 1 | 0 | 0 | 0 | 0 | 0 | 1 | | Attach request |
| 0 | 1 | 0 | 0 | 0 | 0 | 1 | 0 | | Attach accept |
| 0 | 1 | 0 | 0 | 0 | 0 | 1 | 1 | | Attach complete |
| 0 | 1 | 0 | 0 | 0 | 1 | 0 | 0 | | Attach reject |
| 0 | 1 | 0 | 0 | 0 | 1 | 0 | 1 | | Detach request |
| 0 | 1 | 0 | 0 | 0 | 1 | 1 | 0 | | Detach accept |

The Detach Type is a half octet in length. The following table shows the format of the Detach Type according to this embodiment.

| 8 | 7 | 6 | 5 | | 4 | 3 | | 2 | 1 | |
|---|---|---|---|---|---|---|---|---|---|---|
| Detach type IEI | | | | Switch off | | | Type of detach | | | octet 1 |

The following table shows the values for the least significant bits of the octet (different from the embodiment illustrated in FIG. 6).

| In the network to UE direction: | | | | |
|---|---|---|---|---|
| Bits | | | | |
| **3** | **2** | **1** | | |
| 0 | 0 | 1 | | re-attach required |
| 0 | 1 | 0 | | re-attach not required |
| 0 | 1 | 1 | | IMSI detach |
| 1 | 1 | 0 | | reserved |
| 1 | 1 | 1 | | reserved |
| | | | | |
| All other values are interpreted as "re-attach not required" in this version of the protocol. | | | | |

The following table shows the value for the Switch off field.

| In the UE to network direction: | | | | |
|---|---|---|---|---|
| Bit | | | | |
| **4** | | | | |
| 0 | | | | normal detach |
| 1 | | | | switch off |
| | | | | |
| In the network to UE direction bit 4 is spare. The network shall set this bit to zero. | | | | |

The Spare half octet is a half octet in length, which is to pad zeros to Type 1 IE having odd values. The EMM cause field is two octets in length. The following table shows the values for the EMM Cause field.

| 8 | 7 | 6 | 5 | 4 | 3 | 2 | 1 | |
|---|---|---|---|---|---|---|---|---|
| EMM cause IEI | | | | | | | | octet 1 |
| Cause value | | | | | | | | octet 2 |

The following table shows the values for the EMM Cause field.

| | | | | | | | | | |
|---|---|---|---|---|---|---|---|---|---|
| 0 | 0 | 0 | 1 | 1 | 0 | 0 | 1 | | Not authorized for this CSG |
| 0 | 0 | 0 | 1 | 1 | 0 | 1 | 0 | | Non-EPS authentication unacceptable |
| 0 | 0 | 0 | 1 | 1 | 1 | 0 | 0 | | CSG Authorization Allowed |

S702: The MME sends an Update Bearer Request message (Update Bearer Request) to an SGW and changes the state of the default bearer of the UE from "emergency" to "normal".

S703: The S-GW sends an Update Bearer Request message (Update Bearer Request) to a P-GW.

S704: The P-GW interacts with the PCRF to notify the PCRF that the EPS bearer is updated.

S705: The P-GW acknowledges with an Update Bearer Response message (Update Bearer Response).

S706: The S-GW acknowledges with an Update Bearer Response message.

S707: If the UE receives the Detach Request message from the MME in step S701, the UE sends a Detach Accept message to the MME at any time after step S701. The UE, according to the CSG cell where the Detach Request message is received, adds the CSG ID of the CSG cell to the ACL of the UE, or changes the ACL state of the UE to "valid" with respect to an existing CSG ID.

After the Detach Accept message is received, if the Detach message received by the UE carries an instruction for performing an Attach procedure again and carries information indicating the change of the CSG membership in the Detach cause value, the UE initiates another connection, that is, the UE initiates an Attach Request by an Attach Request procedure, and performs normal access procedures in the subsequent procedures. Once the Attach procedure is successful, the UE may directly use the service by using the bearer updated by the MME for the UE, without establishing a new default bearer.

S708: Determine, according to the Detach decision of the MME, whether to release the current radio connection. Optionally, if the current radio connection is released, the subsequent steps S720-S722 need to be performed; if the current radio connection is not released, the subsequent steps S720-S722 may be ignored.

S709-S710: Notify the HSS of execution of the entire procedure. These steps are optional.

S711-S719: Perform a Normal Attach procedure, including authentication and encryption.

S720-S721: Establish a radio connection. These steps are optional.

S722-S724: Complete the Attach procedure.

According to the above embodiment, when the UE initiates an Emergency Attach procedure, the CSG membership of the UE changes, and the MME triggers a Detach procedure, carries, in the Detach message, information indicating that the Detach cause is the change of the CSG membership and information instructing the UE to access the network again. Meanwhile, the MME modifies a previous emergency bearer. After receiving the Detach message, the UE maintains the local ACL, initiates another access procedure; or initiates another access procedure and maintains the local ACL according to the access result. After the authorization and authentication of the UE are successful, the MME does not establish a default bearer but reuses a previously updated bearer.

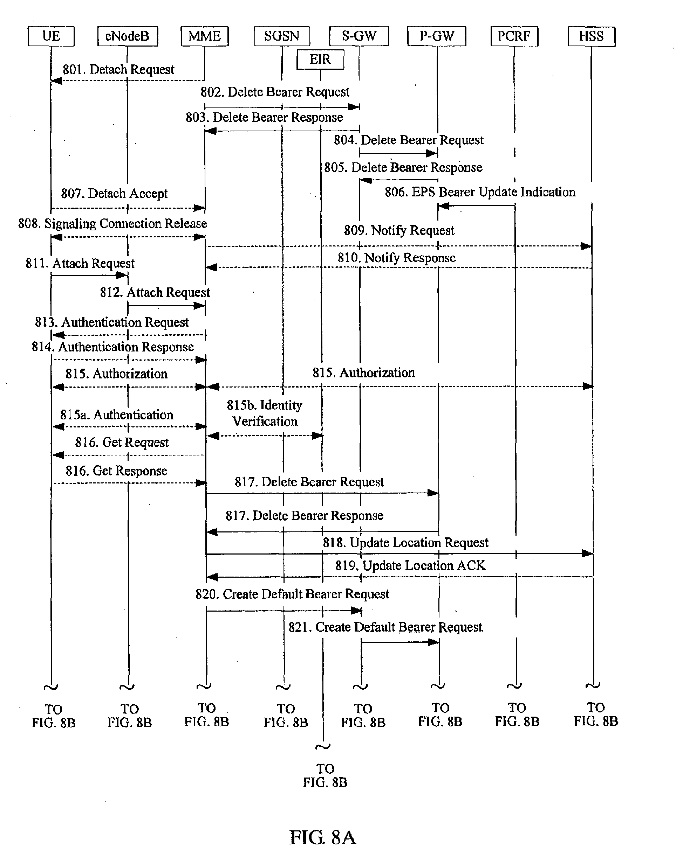

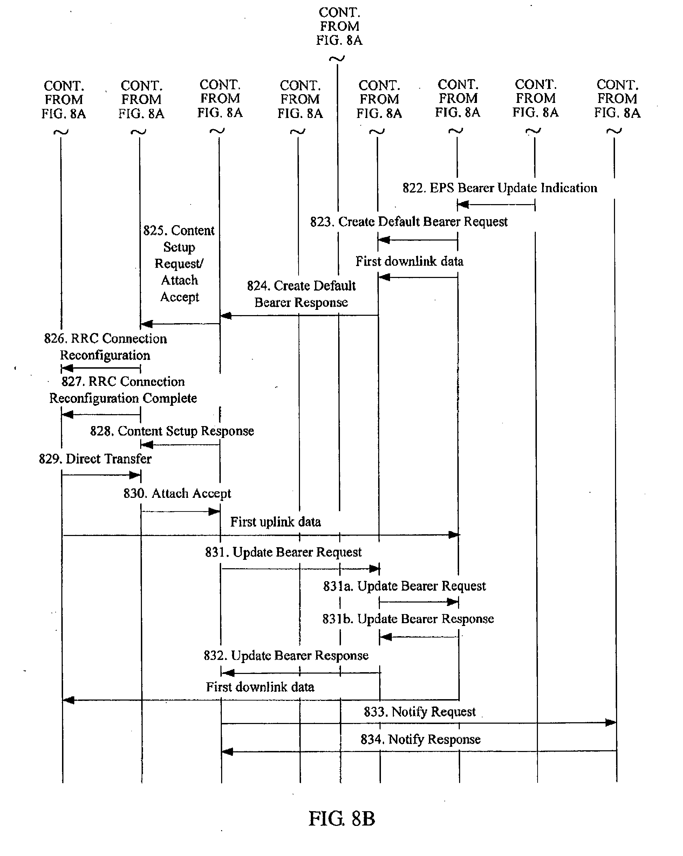

FIG. 8A and FIG. 8B show a process of initiating another Attach procedure and maintaining a local ACL by a UE according to a Detach message sent by an MME according to the fifth embodiment of the method of managing CSG membership.

In this embodiment, the MME specifies that the Detach message is used to notify the UE that the CSG membership of the UE changes so that the CSG membership of the UE in the "emergency" state is managed. The UE needs to initiate another Attach procedure and reestablish a bearer. The prerequisite is the same as that for procedures illustrated in FIG. 2-4. To be specific, when the UE is in the "emergency service" state, the network may sense the state of the UE; when the CSG membership of the UE changes, the HSS notifies the MME that the CSG membership of the UE changes. However, in the "emergency" state, the network side may not notify the UE of the above state change in OMA DM/OTA mode, and therefore the network side sends a Detach message to the UE according to information about the current state of the UE, where the Detach message carries the CSG ID of the CSG cell where the CSG membership changes and the information instructing the UE to initiate another Attach procedure. The UE needs to initiate another Attach procedure and establish a default bearer. After the above procedures are performed successfully, the UE may use the service provided by the network only after accessing the network by initiating a normal Service Request message. During the ACL update procedure directed to the CSG ID, the UE may, after receiving the Attach message, update the local ACL; or when performing another Attach procedure by using the CSG ID, the UE may also update the local ACL according to the Attach result. If the ACL is updated successfully, the CSG ID is added to the local ACL; otherwise, the CSG ID is not changed. The specific steps are as follows:

S801: This step is the same as that described in the embodiment illustrated by FIG. 5. To be specific, the MME needs to send a Service Request message by using a Detach Request message (Detach Request) and carry information indicating the change of the CSG membership in the Detach Request message and information instructing the UE to access the network again.

The following table shows the format of the Detach Request message.

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Detach request message tity | Message type | M | V | 1 |
| | | 9.8 | | | |
| | Detach type | Detach type | M | V | 1/2 |
| | | 9.9.3.7 | | | |
| | Spare half octet | Spare half octet | M | V | 1/2 |
| | | 9.9.2.9 | | | |
| 53 | EMM cause | EMM cause | O | TV | 2 |
| | | 9.9.3.9 | | | |

In the above table, Protocol Discriminator and Security Header type are universal header fields, which are defined in 3GPP TS 24.007.

The Detach Request Message Identity is composed of Message Type and is one octet in length. The following table shows the message types defined by Message Type. In this embodiment, Message Type is set to Detach Request.

| Bits | | | | | | | | | |
|---|---|---|---|---|---|---|---|---|---|
| | | 6 | 5 | 4 | 3 | 2 | 1 | | |
| | | | | | | | | | |
| | | - | - | - | - | - | - | | EPS mobility management messages |
| | | | | | | | | | |
| | | 0 | 0 | 0 | 0 | 0 | 1 | | Attach request |
| | | 0 | 0 | 0 | 0 | 1 | 0 | | Attach accept |
| | | 0 | 0 | 0 | 0 | 1 | 1 | | Attach complete |
| | | 0 | 0 | 0 | 1 | 0 | 0 | | Attach reject |
| | | 0 | 0 | 0 | 1 | 0 | 1 | | Detach request |
| | | 0 | 0 | 0 | 1 | 1 | 0 | | Detach accept |

The Detach Type is a half octet in length. The following table shows the format of the Detach Type according to this embodiment.

| 8 | 7 | 6 | 5 | | 4 | 3 | | 2 | 1 | |
|---|---|---|---|---|---|---|---|---|---|---|
| Detach type IEI | | | | Switch off | | | Type of detach | | | octet 1 |

The following table shows the values for the least significant bits of the octet (different from the embodiment illustrated in FIG. 6.

| In the network to UE direction: | | | | |
|---|---|---|---|---|
| Bits | | | | |
| **3** | **2** | **1** | | |
| 0 | 0 | 1 | | re-attach required |
| 0 | 1 | 0 | | re-attach not required |
| 0 | 1 | 1 | | IMSI detach |
| 1 | 1 | 0 | | reserved |
| 1 | 1 | 1 | | reserved |
| | | | | |
| All other values are interpreted as "re-attach not required" in this version of the tocol. | | | | |

The following table shows the value for the Switch off field.

| In the UE to network direction: | | | | |
|---|---|---|---|---|
| Bit | | | | |
| **4** | | | | |
| 0 | | | | normal detach |
| 1 | | | | switch off |
| | | | | |
| In the network to UE direction bit 4 is spare. The network shall set this bit to zero. | | | | |

The Spare half octet is a half octet in length, which is to pad zeros to Type 1 IE having odd values. The EMM cause field is two octets in length. The following table shows the values for the EMM Cause field.

| 8 | 7 | 6 | 5 | 4 | 3 | 2 | 1 | |
|---|---|---|---|---|---|---|---|---|
| EMM cause IEI | | | | | | | | octet 1 |
| Cause value | | | | | | | | octet 2 |

The following table shows the values for the EMM Cause field.

| | | | | | | | | | |
|---|---|---|---|---|---|---|---|---|---|
| 0 | 0 | 0 | 1 | 1 | 0 | 0 | 1 | | Not authorized for this CSG |
| 0 | 0 | 0 | 1 | 1 | 0 | 1 | 0 | | Non-EPS authentication unacceptable |
| 0 | 0 | 0 | 1 | 1 | 1 | 0 | 0 | | CSG Authorization Allowed |

S802: Any valid EPS bearer of the UE in the S-GW becomes invalid after the MME sends a Delete Bearer Request message (Delete Bearer Request) to an S-GW.

S803: The S-GW acknowledges with a Delete Bearer Response message (Delete Bearer Response).

S804: The S-GW sends a Delete Bearer Request to a P-GW.

S805: The P-GW acknowledges with a Delete Bearer Response message.

S806: The P-GW interacts with the PCRF to notify the PCRF that the EPS bearer is released.

S807: If the UE receives the Detach Request message from the MME in step S801, the UE sends a Detach Accept message to the MME at any time after step S801.The UE, according to the CSG cell where the Detach Request is received, adds the CSG ID of the CSG cell to the ACL of the UE, or changes the ACL state of the EU to "valid" with respect to an existing CSG ID.

After the Detach Accept message is received, if the Detach message received by the UE carries an instruction for performing an Attach procedure again and carries information indicating the change of the CSG membership in the Detach cause value, the UE initiates another connection, that is, the UE initiates an Attach procedure by sending an Attach Request, in which the Attach procedure is similar to the Attach procedure illustrated in FIG. 2A and FIG 2B.

S808-S834: Perform a Normal Attach procedure and establish a default bearer. The detailed procedure is similar to the Attach procedure illustrated in FIG. 2A and FIG. 2B, and is not detailed here.

According to the above embodiment, when the UE initiates an Emergency Attach procedure, the CSG membership of the UE changes, and the MME triggers a Detach procedure, indicating that the Detach cause is the change of the CSG membership and instructing the UE to access the network again. After receiving the Detach message, the UE maintains the local ACL, initiates another access procedure; or initiates another access procedure and maintains the local ACL according to the access result.

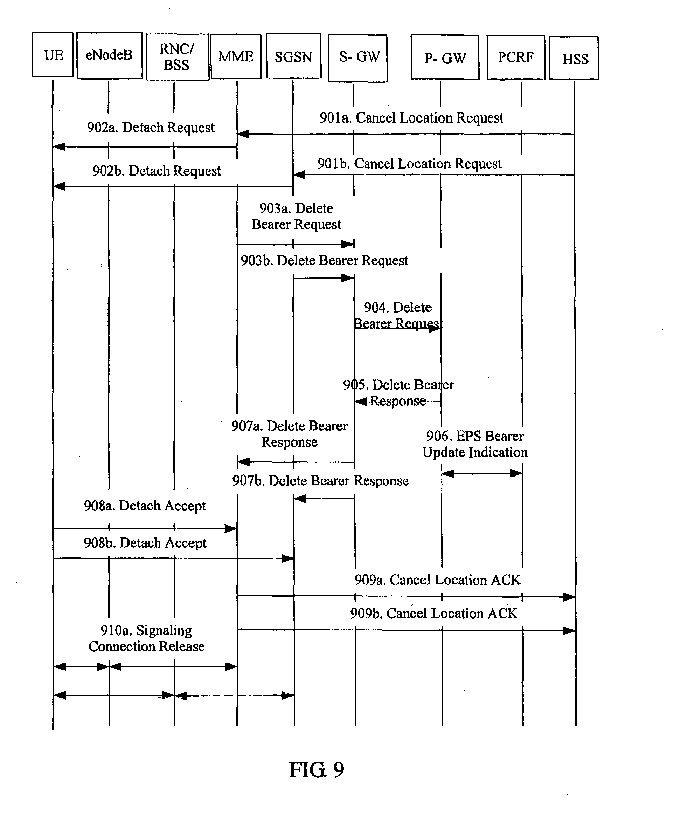

FIG. 9 shows a process of initiating a call again by a UE according to a DETACH message sent by an MME according to the sixth embodiment of the method of managing CSG membership.

In this embodiment, the HSS triggers the process of managing the CSG membership of all the UEs in the "emergency" state. Different from the above-mentioned embodiment, in this embodiment the entire Detach procedure is triggered by the HSS instead of the MME. The prerequisite is the same as that for procedures illustrated in FIG. 2-4. To be specific, when the UE is in the "emergency service" state, the network may sense the state of the UE; When the CSG membership of the UE changes, the HSS needs to notify the MME that the CSG membership of the UE changes. However, in the "emergency" state, the network side may not notify the UE of the above state change in OMA DM/OTA mode, and therefore the network side sends a Detach message to the UE according to information about the current state of the UE, and updates the ACL of the UE by using the Detach procedure or triggers the UE to perform a Re-Attach procedure. The specific steps are as follows:

S901: When the network side senses the change of the CSG membership of the UE, the HSS triggers a Detach procedure and notifies the UE of the change of the CSG membership. Therefore, the HSS sends a Cancel Location Request message (Cancel Location) to the MME. The Cancel Location Request message carries location cancellation information (Cancellation) and information instructing the UE to perform a Re-Attach procedure. The cause of Cancel Location is the change of the CSG membership.

S902-S908: Operation procedures in these steps are similar to those described in the second embodiment to the fifth embodiment. According to this embodiment, the HSS triggers a Detach procedure of the MME, notifies the UE of the change of the CSG membership, and releases radio links. For other procedures, see the descriptions of the second embodiment to the fifth embodiment.

S909: The MME acknowledges the deletion of the MME context and EPS bearer with a Cancel Location ACK message (Cancel Location Ack).

S910: After receiving a Detach Accept message (Detach Accept), the MME sends an S1 release command (with the cause being Detach) to an eNodeB to release the S1-MME signaling connection.

According to the above embodiment, when the CSG membership of the HSS changes, the HSS triggers a Detach procedure. The UE maintains the local ACL, according to the cause value carried in the Detach message and information indicating whether to access the network again, and the CSG ID of the CSG cell where the Detach message is received,; or accesses the CSG cell again, and maintains the local ACL according to the access result.

In the above-mentioned embodiment, when the UE may not timely receive the Detach message sent by the network side, the UE triggers a new Attach procedure, and adds a related CSG ID to the local ACL according to the Attach result or the type of the Detach message.

Referring to FIG. 5, on the UE side, the UE may not receive the Detach Request message sent in step S501 because the UE already moves out of the CSG cell or fails to receive a paging message. Consequently, the subsequent procedures may not be performed. On the network side, the procedure for deleting or updating the bearer related to the Detach procedure is still triggered. According to this embodiment, the bearer deletion or update is limited to bearer deletion; that is, the network side deletes all information related to the "emergency" state. A bearer update mainly refers to changing the state of the default bearer to "non-emergency".

The following describes the operations on the UE side in detail. The "emergency" state of the UE is maintained because the UE may not obtain the Detach Request message initiated by the network side. When the UE needs to initiate a service, the UE side initiates a Service Request message (Service Request) and carries, in the Service Request message, information indicating that the service type is "emergency". After the network side receives the Service Request message, because the service type is "emergency" and the CSG ID is the CSG ID that is changed when the CSG membership changes, the UE needs to access the CSG cell as a CSG member. Correspondingly, the MME sends a Service Request Reject message (Service Request Reject) to the UE according to the Detach result, the CSG ID of the Service Request, and the information saved on the network side, carries the reject cause (the mode for carrying the cause may refer to the above-mentioned embodiment), and instructs the UE to initiate another Normal Attach procedure. After receiving the Service Request Reject message, the UE initiates another Attach procedure. The detailed procedures may refer to FIG. 2A and FIG. 2B. After the Attach procedure is performed successfully, the UE receives the service normally; and after receiving the Service Request Reject message, the UE may, according to the cause value carried in the Service Request Reject message, update the local ACL, or update the local ACL according to the Attach result.

If the CSG ID of the initiated Service Request message is not the CSG ID of the original CSG cell, the UE has moved to another cell in the case of an emergency. If an Emergency Attach or Attach procedure has already been initiated before the Service Request message is initiated, the default bearer of the UE has already been reestablished or updated. Therefore, the MME may provide the service by using this default bearer. If the UE does not initiate an Attach procedure before sending the Service Request message, the UE still remains in an original state. If the bearer of the MME is not updated after the Detach procedure, the state of the MME is inconsistent with that of the UE. Therefore, the MME sends a Service Request Reject message to deny the access of the UE and carries the cause value to instruct the UE to access the network again. The CSG ID has changed. Therefore, the Service Request Reject message is a trigger condition for the UE to initiate an Attach procedure again. After receiving the Service Request Reject message, the UE initiates an Emergency Attach or normal (normal) Attach procedure according to an actual network condition. After the Attach procedure is performed successfully, the UE requests and uses the service by sending a normal Service Request.

According to the above description, the UE may not receive the Detach message because the UE moves out of the CSG cell or fails to receive signals, and consequently, may not trigger the procedure for managing the CSG membership on the network side. After the UE initiates the Emergency Attach procedure and the CSG membership changes on the network side, the MME triggers the Detach procedure, carries, in the Detach message, information indicating that the Detach cause is the change of the CSG membership of the UE, and instructs the UE to access the network again. Meanwhile, the MME modifies, updates, or release the bearer previously established for the UE. The UE initiates another Service Request procedure and carries the service type in the Service Request message. The MME receives the Service Request message, and determines, according to the service type carried in the Service Request message and the ID of the cell where the Service Request message is received, in combination with the UE-related information retained on the network side after the Detach procedure, whether the UE moves to another CSG cell. If the UE does not move to another CSG cell and still stays in the CSG cell identified by the original CSG ID, and the Service Request is emergency, the MME rejects the Service Request message and instructs the UE to initiate another Attach procedure. The UE updates the local ACL according to the Service Request Reject message or updates the local ACL according to the Attach result. If the UE moves to another CSG cell, the CSG ID changes, and the MME rejects the Service Request message and instructs the UE to initiate another Attach procedure, without changing the ACL of the UE.

According to the above embodiment, when managing the CSG membership, the network side may send a Detach message to the UE after the CSG membership of the UE changes, where the Detach message carries information indicating that the Detach cause is the change of the CSG membership of the UE or the expiry of the CSG membership. Upon receiving the Detach message, the UE maintains its ACL according to the information carried in the Detach message.

In addition, the UE may initiate a Detach Request message. After receiving the Detach Request message, the network side determines that the CSG membership of the UE changes. In this case, the network side may choose not to process or to ignore the Detach Request message, and then send a Detach message to the UE to instruct the UE to detach from the network, where the Detach message carries information indicating that the Detach cause is the change of the CSG membership of the UE or the expiry of the CSG membership. Upon receiving the Detach message, the UE maintains its ACL according to the information carried in the Detach message.

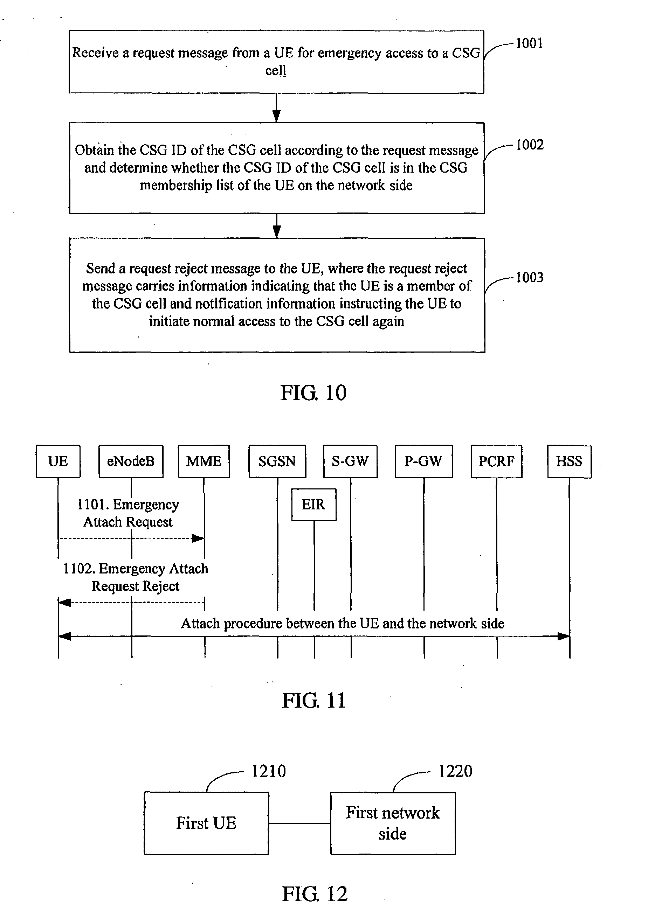

FIG. 10 is a flowchart of a method of managing CSG membership according to the seventh embodiment of the present invention.

S1001: Receive a request message sent by a UE for emergency access to a CSG cell.

S1002: Obtain the CSG ID of the CSG cell according to the request message and determine whether the CSG ID of the CSG cell is in the CSG membership list of the UE on the network side.

S1003: Send a request reject message to the UE, where the request reject message carries information indicating that the UE is a member of the CSG cell and notification information instructing the UE to initiate normal access to the CSG cell again.

FIG. 11 shows a process of managing CSG membership when the ACL of the UE is inconsistent with the ACL on the network side according to the eighth embodiment of the method of managing CSG membership.

In this embodiment, when the CSG ID of a CSG cell is not in the local ACL of the UE, if the CSG ID on the network side is in the ACL of the UE saved on the network side, the ACL of the UE may be inconsistent with the ACL on the network side. In this case, if the UE accesses the CSG cell, the UE enters the "emergency" state in the CSG cell according to the local ACL of the UE, and initiates an Emergency Attach procedure in the CSG cell. After the MME receives the Emergency Attach message, if the CSG membership of the UE in the MME is valid, the MME sends an Attach Reject message and carries the reject cause in the message to notify the UE that the UE is a CSG member and needs to initiate a Normal Attach procedure instead of an Emergency Attach procedure. In addition, the MME notifies the UE that the UE needs to initiate another Normal Attach procedure after initiating the Attach Request message. The specific steps are as follows:

S1101: The UE determines that the CSG ID of the CSG cell where the UE currently camps is not in the local ACL of the UE, and initiates an Emergency Attach procedure in the CSG cell where the UE currently camps by sending an Emergency Attach Request message (Emergency Attach Request) to the MME.

S1102: After receiving the Emergency Attach Request from the UE, the MME determines, from the Emergency Attach Request, that the CSG membership of the UE is included in the ACL of the MME, and therefore the MME determines to reject the Emergency Attach Request of the UE.

The subsequent steps involved in the Normal Attach procedure initiated by the UE are the same as those illustrated in FIG. 2A and FIG. 2B, and are therefore not detailed here.

According to the above embodiment, when the local ACL of the UE is not synchronous with the ACL of the MME, the Emergency Attach Request initiated by the UE is rejected by the MME, and the MME carries the reject cause in the Attach Reject message and instructs the UE to perform a Normal Attach procedure again. After receiving the Attach Reject message, the UE may maintain its ACL and initiate a Normal Attach procedure; or after receiving the Attach Reject message, the UE initiates a Normal Attach procedure, and maintains its ACL according to the Attach result.

Corresponding to the embodiments of the method of managing CSG membership, the present invention also provides embodiments of a system, network side device, and UE for managing CSG membership.

FIG. 12 is a block diagram of the first embodiment of a system of managing CSG membership according the present invention.

The system includes a first UE 1210 and a first network side 1220.

The first UE 1210 is configured to camp on a CSG cell and establish a default bearer.

The first network side 1220 is configured to: when detecting a change of CSG membership of the first UE 1210, trigger a Detach procedure between the network side and the first UE 1210 by using an existing path between the network side and the first UE 1210, and indicate state information about the CSG membership of the first UE 1210. The state information is used to instruct the first UE 1210 to perform an operation with respect to the change of the CSG membership according to the state information.

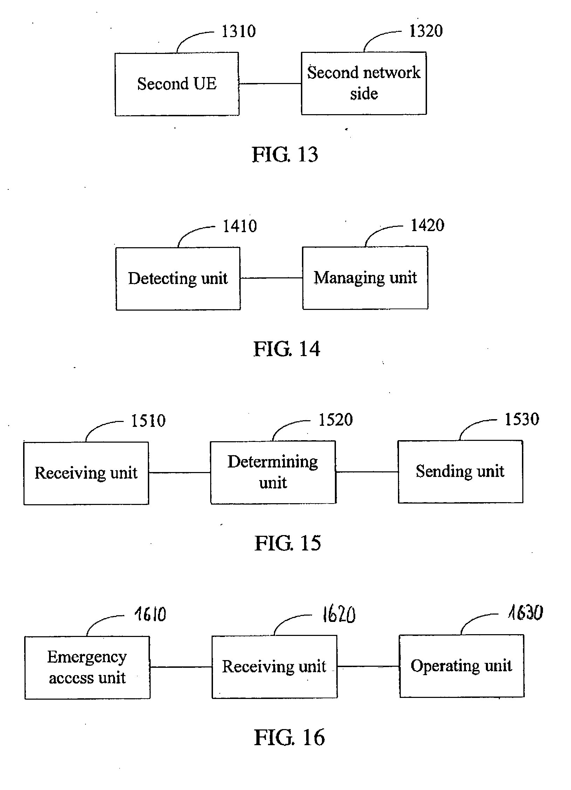

FIG. 13 is a block diagram of the second embodiment of a system of managing CSG membership according to the present invention.

The system includes a second UE 1310 and a second network side 1320.

The second UE 1310 is configured to send a request message for emergency access to a CSG cell to the second network side 1320.

The second network side 1320 is configured to: receive the request message, obtain the CSG ID of the CSG cell, and send a request reject message to the UE when determining that the CSG ID of the CSG cell exists in a CSG membership list of the second UE 1310 on the network side 1320. The request reject message carries information indicating that the second UE 1310 is a member of the CSG cell and information instructing the second UE 1310 to initiate normal access to the CSG cell again.

FIG. 14 is a block diagram of the first embodiment of a network side device according to the present invention.

The network side device includes a detecting unit 1410 and a managing unit 1420.

The detecting unit 1410 is configured to detect a change of CSG membership of a UE when the UE camps on a CSG cell and establishes a default bearer.

The managing unit 1420 is configured to trigger a Detach procedure between the network side and the UE by using an existing path between the network side and the UE, and indicate state information about the CSG membership, where the state information is used to instruct the UE to perform an operation with respect to the change of the CSG membership according to the state information.

Specifically, when the UE camps on the CSG cell in emergency access mode, the managing unit 1420 may include (not shown in FIG. 14): a first sending unit, configured to send a Detach message to the UE, where the Detach message carries information indicating the change of the CSG membership and notification information instructing the UE not to access the network side again, and the information indicating the change of the CSG membership is used to instruct the UE to update a local ACL according to the CSG ID of a CSG cell where the UE currently camps; and a first maintaining unit, configured to retain the default bearer between the network side and the UE, and maintain the state of the default bearer to "emergency".

Specifically, the managing unit 1420 may include (not shown in FIG. 14): a second sending unit, configured to send a Detach message to the UE when the UE camps on the CSG cell in emergency access mode, where the Detach message carries information indicating the change of the CSG membership, notification information instructing the UE not to access the network side again, and notification information instructing the UE to change the access state, and the information indicating the change of the CSG membership is used to instruct the UE to update a local ACL according to the CSG ID of a CSG cell where the UE currently camps; and a second maintaining unit, configured to retain the default bearer between the network side and the UE, change the state of the default bearer to "normal", and change the access state of the UE from "emergency" to "normal".

Specifically, the managing unit 1420 may include (not shown in FIG. 14): a third sending unit, configured to send a Detach message to the UE when the UE camps on the CSG cell in emergency access mode, where the Detach message carries information indicating the change of the CSG membership and notification information instructing the UE to access the network side again, and the information indicating the change of the CSG membership is used to instruct the UE to maintain a local ACL according to the CSG ID of a CSG cell where the UE currently camps; and a third maintaining unit, configured to update the default bearer between the network side and the UE, change the access state of the UE from "emergency" to "normal" and reuse the updated bearer after the UE accesses the network side again according to the notification information.

Specifically, the managing unit 1420 may include (not shown in FIG. 14): a fourth sending unit, configured to send a Detach message to the UE when the UE camps on the CSG cell in emergency access mode, where the Detach message carries information indicating the change of the CSG membership and notification information instructing the UE to access the network side again, and the information indicating the change of the CSG membership is used to instruct the UE to maintain a local ACL according to the CSG ID of a CSG cell where the UE currently camps; and a fourth maintaining unit, configured to release the default bearer between the network side and the UE, change the access state of the UE from "emergency" to "normal" and reestablish a default bearer between the network side and the UE after the UE accesses the network side again according to the notification information.

Specifically, the managing unit 1420 may include (not shown in FIG. 14): a fifth sending unit, configured to send a Detach message to the UE when the UE camps on the CSG cell in emergency access mode; a fifth maintaining unit, configured to release the default bearer between the network side and the UE; and a fifth receiving unit, configured to receive a Service Request message sent by the UE, the Service Request message being a message that the UE sends when the UE does not receive the Detach message and needs to initiate a service; where the fifth sending unit is further configured to send a Service Request Reject message to the UE, the Service Request Reject message carrying information indicating the change of the CSG membership and information instructing the UE to access the network side again, and the information indicating the change of the CSG membership is used to instruct the UE to maintain a local ACL according to the CSG ID of a CSG cell where the UE currently camps.

Further, the managing unit 1420 may include (not shown in FIG. 14): a triggering unit, configured to receive a command for triggering the Detach message.

FIG. 15 is a block diagram of the second embodiment of a network side device according to the present invention.

The network side device includes a receiving unit 1510, a determining unit 1520, and a sending unit 1530.

The receiving unit 1510 is configured to receive a request message sent by a UE for emergency access to a CSG cell.

The determining unit 1520 is configured to determine, after obtaining a CSG ID of the CSG cell according to the request message, whether the CSG ID is in a CSG membership list of the UE on the network side.

The sending unit 1530 is configured to send a request reject message to the UE when the determining unit determines that the CSG ID is in the CSG membership list of the UE on the network side, where the request reject message carries information indicating that the UE is a member of the CSG cell and notification information instructing the UE to initiate normal access to the CSG cell again.

FIG. 16 is a block diagram of a UE according to an embodiment of the present invention.

The UE includes an emergency access unit 1610, a receiving unit 1620, and an operating unit 1630.

The emergency access unit 1610 is configured to camp on a CSG cell in emergency access mode and to establish a default bearer.

The receiving unit 1620 is configured to receive a Detach message sent by a network side after the network side detects a change of CSG membership of the UE.

The operating unit 1630 is configured to perform an operation with respect to the change of the CSG membership.

According to above description of the embodiments, the network side detects a change of CSG membership of a UE when the UE camps on a CSG cell and establishes a default bearer; and when detecting the change of the CSG membership of the UE, the network side triggers a Detach procedure between the network side and the UE by using an existing path between the network side and the UE, and indicates state information about the CSG membership of the UE, where the state information is used to instruct the UE to perform an operation with respect to the change of the CSG membership according to the state information. According to the embodiments of the present invention, after the UE accesses a CSG cell in emergency access mode and the CSG membership of the UE changes, the network side may manage the CSG membership of the UE by triggering a Detach procedure, ensuring that the UE may access the CSG cell again and manage the local ACL.

Those skilled in the art may understand that the embodiments of the present invention may be implemented by hardware in combination with a necessary general hardware platform. Based on such understandings, the technical solutions of the present invention or the portions contributing to the prior art may be embodied in the form of a software product. The software product may be stored in a storage medium such as a read only memory (ROM), a random access memory (RAM), a magnetic disk, or a compact disk-read only memory (CD-ROM). The software product includes a number of instructions that enable a computer (for example, a personal computer, a server, or a network device) device to execute the methods provided in the embodiments of the present invention.

## Claims

1. A method of managing Closed Subscriber Group, CSG, membership, comprising:
detecting (101), by a network side, a change of CSG membership of a user equipment, UE, when the UE camps on a CSG cell in emergency access mode and establishes a default bearer; and
when detecting the change of the CSG membership of the UE, triggering (102), by the network, a detach procedure between the network side and the UE by using an existing path between the network side and the UE, and indicating state information about the CSG membership of the UE, wherein the state information is configured to instruct the UE to perform an operation with respect to the change of the CSG membership according to the state information.

2. The method according to claim 1, wherein the indicating state information about the CSG membership of the UE comprises:
indicating the UE information about changing of the CSG membership of the UE so that the UE updates a local allowed CSG list, ACL, according to the information about changing of the CSG membership; or
indicating the UE information about invalidity of the CSG membership of the UE so that the UE deletes information about the CSG from the local ACL according to information about invalidity of the CSG membership of the UE; or
indicating the UE information about validity of the CSG membership of the UE so that the UE maintains information about the CSG as valid information in the ACL according to information about validity of the CSG membership of the UE.

3. The method according to claim 1, wherein the triggering (102) a detach procedure between the network side and the UE comprises:
triggering, by the network side, the detach procedure by sending a detach Request message to the UE.

4. The method according to claim 3, wherein:
the UE is not a CSG member, and the UE camping on the CSG cell in emergency access mode comprises: camping on the CSG cell by sending an emergency access request to the network side; or
the UE is a CSG member and accesses the CSG cell as the CSG member, and the UE camping on the CSG cell in emergency access mode comprises: camping on the CSG cell by sending an emergency access request to the network side after the CSG membership of the UE changes and the UE detaches from the network side.

5. The method according to claim 1, wherein the triggering (102) a detach procedure between the network side and the UE by using an existing path between the network side and the UE, and indicating state information about the CSG membership of the UE comprise:
sending, by a mobility management entity, MME, on the network side, a detach message to the UE, wherein the detach message carries information indicating the change of the CSG membership and notification information instructing the UE not to access the network side again, and the information indicating the change of the CSG membership is used to instruct the UE to update a local allowed CSG list, ACL, according to a CSG identity, CSG ID, of a CSG cell where the UE currently camps; and
retaining, by the network side, the default bearer between the network side and the UE, and maintaining a state of the default bearer to "emergency".

6. The method according to claim 1, wherein the triggering (102) a detach procedure between the network side and the UE by using an existing path between the network side and the UE, and indicating state information about the CSG membership of the UE comprise:
sending, by a mobility management entity, MME, on the network side, a detach message to the UE, wherein the Detach message carries information indicating the change of the CSG membership, notification information instructing the UE not to access the network side again, and notification information instructing the UE to change an access state, and the information indicating the change of the CSG membership is used to instruct the UE to update a local allowed CSG list, ACL, according to a CSG identity, CSG ID, of a CSG cell where the UE currently camps; and
retaining, by the network side, the default bearer between the network side and the UE, changing a state of the default bearer to "normal", and changing the access state of the UE from "emergency" to "normal".

7. The method according to claim 1, wherein the triggering (102) a detach procedure between the network side and the UE by using an existing path between the network side and the UE, and indicating state information about the CSG membership of the UE comprise:
sending, by a mobility management entity, MME, on the network side, a Detach message to the UE, wherein the Detach message carries information indicating the change of the CSG membership and notification information instructing the UE to access the network side again, and the information indicating the change of the CSG membership is used to instruct the UE to maintain a local allowed CSG list, ACL, according to a CSG identity, CSG ID, of a CSG cell where the UE currently camps;
updating, by the network side, the default bearer between the network side and the UE, and establishing an updated bearer;
changing, by the network side, an access state of the UE from "emergency" to "normal" after the UE accesses the network side again according to the notification information; and
reusing, by the network side, the updated bearer.

8. The method according to claim 1, wherein the triggering (102) a detach procedure between the network side and the UE by using an existing path between the network side and the UE, and indicating state information about the CSG membership of the UE comprise:
sending, by a mobility management entity, MME, on the network side, a Detach message to the UE, wherein the Detach message carries information indicating the change of the CSG membership and notification information instructing the UE to access the network side again, and the information indicating the change of the CSG membership is used to instruct the UE to maintain a local allowed CSG list, ACL, according to a CSG identity, CSG ID, of a CSG cell where the UE currently camps;
releasing, by the network side, the default bearer between the network side and the UE;
changing, by the network side, an access state of the UE from "emergency" to "normal" after the UE accesses the network side again according to the notification information; and
reestablishing, by the network side, a default bearer between the network side and the UE.

9. The method according to any one of claims 5-8, wherein the sending, by an MME on the network side, a detach message to the UE is:
triggering, by a home subscriber server, HSS, on the network side, the MME to send the Detach message to the UE.

10. The method according to claim 1, wherein the triggering (102) a detach procedure between the network side and the UE by using an existing path between the network side and the UE, and indicating state information about the CSG membership of the UE comprise:
sending, by a mobility management entity, MME, on the network side, a Detach message to the UE, and releasing the default bearer between the network side and the UE;
receiving a Service Request message sent by the UE, the Service Request message being a message that the UE sends when the UE does not receive the Detach message and needs to initiate a service; and
sending a Service Request Reject message to the UE, wherein the Service Request Reject message carries information indicating the change of the CSG membership and notification information instructing the UE to access the network side again, and the information indicating the change of the CSG membership is used to instruct the UE to maintain a local allowed CSG list, ACL, according to a CSG identity, CSG ID, of a CSG cell where the UE currently camps.

11. A network side device, configured to implement the method according to any one of the preceding claims 1 to 10.

## Patentansprüche

1. Verfahren für das Management der Mitgliedschaft in einer geschlossenen Teilnehmergruppe, CSG-Mitgliedschaft, das Folgendes umfasst:
Detektieren (101) einer Änderung der CSG-Mitgliedschaft eines Anwendergeräts, UE, durch eine Netzseite, wenn sich das UE in einer CSG-Zelle in Notfallzugangsbetriebsart aufhält und einen Standardträger aufbaut; und
wenn die Änderung in der CSG-Mitgliedschaft des UE detektiert wird, Einleiten (102) durch das Netz einer Trennungsprozedur zwischen der Netzseite und dem UE unter Verwendung eines bestehenden Wegs zwischen der Netzseite und dem UE und
Angeben von Zustandsinformationen über die CSG-Mitgliedschaft des UE, wobei die Zustandinformationen konfiguriert sind, das UE anzuweisen, eine Operation in Bezug auf die Änderung der CSG-Mitgliedschaft gemäß den Zustandsinformationen auszuführen.

2. Verfahren nach Anspruch 1, wobei das Angeben von Zustandsinformationen über die CSG-Mitgliedschaft des UE Folgendes umfasst:
Angeben der UE-Informationen über eine Änderung der CSG-Mitgliedschaft des UE, so dass das UE eine lokale Liste erlaubter CSGs, ACL, gemäß den Informationen über eine Änderung der CSG-Mitgliedschaft aktualisiert; oder
Angeben der UE-Informationen über eine Ungültigkeit der CSG-Mitgliedschaft des UE, so dass das UE Informationen über die CSG aus der lokalen ACL gemäß den Informationen über Ungültigkeit der CSG-Mitgliedschaft des UE löscht; oder
Angeben der UE-Informationen über eine Gültigkeit der CSG-Mitgliedschaft des UE, so dass das UE Informationen über die CSG als gültige Informationen in der ACL gemäß den Informationen über eine Gültigkeit der CSG-Mitgliedschaft des UE erhält.

3. Verfahren nach Anspruch 1, wobei das Einleiten (102) einer Trennungsprozedur zwischen der Netzseite und dem UE Folgendes umfasst:
Einleiten der Trennungsprozedur durch die Netzseite durch Senden einer Trennungsanforderungsnachricht zu dem UE.

4. Verfahren nach Anspruch 3, wobei:
das UE kein CSG-Mitglied ist, und der Aufenthalt des UE in der CSG-Zelle in Notfallzugriffsbetriebsart Folgendes umfasst: Aufhalten in der CSG-Zelle durch Senden einer Notfallzugriffsanforderung zu der Netzseite; oder
das UE ein CSG-Mitglied ist und auf die CSG-Zelle als das CSG-Mitglied zugreift und der Aufenthalt des UE in der CSG-Zelle in Notfallzugriffsbetriebsart Folgendes umfasst: Aufhalten in der CSG-Zelle durch Senden einer Notfallzugriffsanforderung zu der Netzseite, nachdem sich die CSG-Mitgliedschaft des UE ändert und sich das UE von der Netzseite trennt.

5. Verfahren nach Anspruch 1, wobei das Einleiten (102) einer Trennungsprozedur zwischen der Netzseite und dem UE unter Verwendung eines bestehenden Wegs zwischen der Netzseite und dem UE und Angeben von Zustandsinformationen über die CSG-Mitgliedschaft des UE Folgendes umfasst:
Senden einer Trennungsnachricht durch eine Mobilitätsmanagemententität, MME, auf der Netzseite zu dem UE, wobei die Trennungsnachricht Informationen, die die Änderung der CSG-Mitgliedschaft angeben, und Meldungsinformationen, die das UE anweisen, nicht wieder auf die Netzseite zuzugreifen, führt und die Informationen,
die die Änderung der CSG-Mitgliedschaft angeben, verwendet werden, das UE anzuweisen, eine lokale Liste erlaubter CSGs, ACL, gemäß einer CSG-Kennung, CSG ID, einer CSG-Zelle, in der sich das UE derzeit aufhält, zu aktualisieren; und
Halten des Standardträgers zwischen der Netzseite und dem UE durch die Netzseite und Erhalten eines Zustands des Standardträgers als "Notfall".

6. Verfahren nach Anspruch 1, wobei das Einleiten (102) einer Trennungsprozedur zwischen der Netzseite und dem UE unter Verwendung eines bestehenden Wegs zwischen der Netzseite und dem UE und Angeben von Zustandsinformationen über die CSG-Mitgliedschaft des UE Folgendes umfasst:
Senden einer Trennungsnachricht durch eine Mobilitätsmanagemententität, MME, auf der Netzseite zu dem UE, wobei die Trennungsnachricht Informationen, die die Änderung der CSG-Mitgliedschaft angeben, Meldungssinformationen, die das UE anweisen, nicht wieder auf die Netzseite zuzugreifen, und Meldungssinformationen, die das UE anweisen, einen Zugriffszustand zu ändern, führt und die Informationen, die die Änderung der CSG-Mitgliedschaft angeben, verwendet werden, die UE anzuweisen, eine lokale Liste erlaubter CSGs, ACL, gemäß einer CSG-Kennung, CSG ID, einer CSG-Zelle, in der sich das UE derzeit aufhält, zu aktualisieren; und
Halten des Standardträgers zwischen der Netzseite und dem UE durch die Netzseite, Ändern eines Zustands des Standardträgers auf "normal" und Ändern des Zugriffszustands des UE von "Notfall" in "normal".

7. Verfahren nach Anspruch 1, wobei das Einleiten (102) einer Trennungsprozedur zwischen der Netzseite und dem UE unter Verwendung eines bestehenden Wegs zwischen der Netzseite und dem UE und Angeben von Zustandsinformationen über 2
die CSG-Mitgliedschaft des UE Folgendes umfasst:
Senden einer Trennungsnachricht durch eine Mobilitätsmanagemententität, MME, auf der Netzseite zu dem UE, wobei die Trennungsnachricht Informationen, die die Änderung der CSG-Mitgliedschaft angeben, und Meldungssinformationen, die das UE anweisen, wieder auf die Netzseite zuzugreifen, führt und die Informationen, die die Änderung der CSG-Mitgliedschaft angeben, verwendet werden, das UE anzuweisen, eine lokale Liste erlaubter CSGs, ACL, gemäß einer CSG-Kennung, CSG ID, einer CSG-Zelle, in der sich das UE derzeit aufhält, zu erhalten;
Aktualisieren des Standardträgers zwischen der Netzseite und dem UE durch die Netzseite und Aufbauen eines aktualisierten Trägers;
Ändern eines Zugriffszustands des UE von "Notfall" in "normal" durch die Netzseite, nachdem das UE wieder auf die Netzseite zugreift, gemäß den Meldungsinformationen; und
Wiederverwenden des aktualisierten Trägers durch die Netzseite.

8. Verfahren nach Anspruch 1, wobei das Einleiten (102) einer Trennungsprozedur zwischen der Netzseite und dem UE unter Verwendung eines bestehenden Wegs zwischen der Netzseite und dem UE und Angeben von Zustandsinformationen über die CSG-Mitgliedschaft des UE Folgendes umfasst:
Senden einer Trennungsnachricht durch eine Mobilitätsmanagemententität, MME, auf der Netzseite zu dem UE, wobei die Trennungsnachricht Informationen, die die Änderung der CSG-Mitgliedschaft angeben, und Meldungsinformationen, die das UE anweisen, wieder auf die Netzseite zuzugreifen, führt und die Informationen, die die Änderung der CSG-Mitgliedschaft angeben, verwendet werden, die UE anzuweisen, eine lokale Liste erlaubter CSGs, ACL, gemäß einer CSG-Kennung, CSG ID, einer CSG-Zelle, in der sich das UE derzeit aufhält, zu erhalten;
Freigeben des Standardträgers zwischen der Netzseite und dem UE durch die Netzseite;
Ändern eines Zugriffszustands des UE von "Notfall" in "normal" durch die Netzseite gemäß den Meldungsinformationen, nachdem das UE wieder auf die Netzseite zugreift; und
erneutes Aufbauen eines Standardträgers durch die Netzseite zwischen der Netzseite und dem UE.

9. Verfahren nach einem der Ansprüche 5-8, wobei das Senden einer Trennungsnachricht durch eine MME auf der Netzseite zu dem UE Folgendes ist:
Einleiten durch einen Teilnehmerheimatserver, HSS, auf der Netzseite, dass die MME die Trennungsnachricht zu dem UE sendet.

10. Verfahren nach Anspruch 1, wobei das Einleiten (102) einer Trennungsprozedur zwischen der Netzseite und dem UE unter Verwendung eines bestehenden Wegs zwischen der Netzseite und dem UE und Angeben von Zustandsinformationen über die CSG-Mitgliedschaft des UE Folgendes umfasst:
Senden einer Trennungsnachricht durch eine Mobilitätsmanagemententität, MME, auf der Netzseite zu dem UE und Freigeben des Standardträgers zwischen der Netzseite und dem UE;
Empfangen einer Dienstanforderungsnachricht, die von dem UE gesendet wird, wobei die Dienstanforderungsnachricht eine Nachricht ist, die das UE sendet, wenn das UE die Trennungsnachricht nicht empfängt und einen Dienst einleiten muss; und
Senden einer Dienstanforderungsverweigerungsnachricht zu dem UE, wobei die Dienstanforderungsverweigerungsnachricht Informationen, die die Änderung der CSG-Mitgliedschaft angeben, und Meldungssinformationen, die das UE anweisen, wieder auf die Netzseite zuzugreifen, führt und die Informationen, die die Änderung der CSG-Mitgliedschaft angeben, verwendet werden, das UE anzuweisen, eine lokale Liste erlaubter CSGs, ACL, gemäß einer CSG-Kennung, CSG ID, einer CSG-Zelle, in der sich die UE derzeit aufhält, zu erhalten.

11. Netzseitige Vorrichtung, die konfiguriert ist, das Verfahren nach einem der vorstehenden Ansprüche 1 bis 10 zu implementieren.

## Revendications

1. Procédé de gestion de l'appartenance à un Groupe d'Abonnés Fermé, CSG (Closed Subscriber Group), comprenant :
la détection (101), par un côté réseau, d'un changement d'appartenance CSG d'un équipement utilisateur, UE (User Equipment), lorsque l'UE se trouve sur une cellule CSG dans un mode d'accès d'urgence et établit un support par défaut ; et
lors de la détection du changement de l'appartenance CSG de l'UE, le déclenchement (102), par le réseau, d'une procédure de détachement entre le côté réseau et l'UE par utilisation d'un trajet existant entre le côté réseau et l'UE, et l'indication d'informations d'état concernant l'appartenance CSG de l'UE, les informations d'état étant configurées pour ordonner à l'UE d'effectuer une opération ayant trait au changement d'appartenance CSG conformément aux informations d'état.

2. Procédé selon la revendication 1, dans lequel l'indication d'informations d'état concernant l'appartenance CSG de l'UE comprend :
l'indication des informations d'UE concernant le changement d'appartenance CSG de l'UE de manière à ce que l'UE mette à jour une liste CSG locale autorisée, ACL (Allowed CSG List), conformément aux informations concernant le changement d'appartenance CSG ; ou
l'indication des informations d'UE concernant l'invalidité de l'appartenance CSG de l'UE de manière à ce que l'UE supprime les informations concernant le CSG de l'ACL locale conformément à des informations concernant l'invalidité de l'appartenance CSG de l'UE ; ou
l'indication des informations d'UE concernant la validité de l'appartenance CSG de l'UE de manière à ce que l'UE maintienne des informations concernant le CSG en tant qu'informations valides dans l'ACL conformément à des informations concernant la validité de l'appartenance CSG de l'UE.

3. Procédé selon la revendication 1, dans lequel le déclenchement (102) d'une procédure de détachement entre le côté réseau et l'UE comprend :
le déclenchement, par le côté réseau, de la procédure de détachement en envoyant un message de Demande de détachement à l'UE.

4. Procédé selon la revendication 3, dans lequel :
l'UE n'est pas un membre CSG, et l'UE se trouvant sur la cellule CSG dans un mode d'accès d'urgence comprend : le fait de se trouver sur la cellule CSG en envoyant une demande d'accès d'urgence au côté réseau ; ou
l'UE est un membre CSG et accède à la cellule CSG en tant que membre CSG, et le fait que l'UE se trouve sur la cellule CSG dans un mode d'accès d'urgence comprend :
le fait de se trouver sur la cellule CSG par envoi d'une demande d'accès d'urgence au côté réseau après que l'appartenance CSG de l'UE a changé et que l'UE s'est détaché du côté réseau.

5. Procédé selon la revendication 1, dans lequel le déclenchement (102) d'une procédure de détachement entre le côté réseau et l'UE par utilisation d'un trajet existant entre le côté réseau et l'UE, et l'indication d'informations d'état concernant l'appartenance CSG de l'UE comprennent :
l'envoi, par une entité de gestion de mobilité, MME (Mobility Management Entity), du côté réseau, d'un message de détachement à l'UE, le message de détachement acheminant des informations indiquant le changement d'appartenance CSG et des informations de notification ordonnant à l'UE de ne pas de nouveau accéder au côté réseau, et les informations indiquant le changement d'appartenance CSG étant utilisées pour ordonner à l'UE de mettre à jour une liste CSG locale autorisée, ACL, conformément à une identité de CSG, CSG ID (CSG identity), d'une cellule CSG dans laquelle l'UE se trouve à l'instant courant ; et
la retenue, par le côté réseau, du support par défaut entre le côté réseau et l'UE, et le maintien d'un état du support par défaut à "urgence".

6. Procédé selon la revendication 1, dans lequel le déclenchement (102) d'une procédure de détachement entre le côté réseau et l'UE par utilisation d'un trajet existant entre le côté réseau et l'UE, et l'indication d'informations d'état concernant l'appartenance CSG de l'UE comprennent :
l'envoi, par une entité de gestion de mobilité, MME, du côté réseau, d'un message de détachement à l'UE, le message de Détachement acheminant des informations indiquant le changement d'appartenance CSG, des informations de notification ordonnant à l'UE de ne pas de nouveau accéder au côté réseau, et des informations de notification ordonnant à l'UE de changer d'état d'accès, et les informations indiquant le changement d'appartenance CSG étant utilisées pour ordonner à l'UE de mettre à jour une liste CSG locale autorisée, ACL, conformément à une identité de CSG, CSG ID, d'une cellule CSG dans laquelle l'UE se trouve à l'instant courant ; et
la retenue, par le côté réseau, du support par défaut entre le côté réseau et l'UE, le changement d'état du support par défaut à "normal", et le changement de l'état d'accès de l'UE d"'urgence" à "normal".

7. Procédé selon la revendication 1, dans lequel le déclenchement (102) d'une procédure de détachement entre le côté réseau et l'UE par utilisation d'un trajet existant entre le côté réseau et l'UE, et l'indication d'informations d'état concernant l'appartenance CSG de l'UE comprennent :
l'envoi, par une entité de gestion de mobilité, MME, du côté réseau, d'un message de Détachement à l'UE, le message de Détachement acheminant des informations indiquant le changement d'appartenance CSG et des informations de notification ordonnant à l'UE d'accéder de nouveau au côté réseau, et les informations indiquant le changement d'appartenance CSG étant utilisées pour ordonner à l'UE de maintenir une liste CSG locale autorisée, ACL, conformément à une identité de CSG, CSG ID, d'une cellule CSG dans laquelle l'UE se trouve à l'instant courant ;
la mise à jour, par le côté réseau, du support par défaut entre le côté réseau et l'UE, et l'établissement d'un support mis à jour ;
le changement, par le côté réseau, d'un état d'accès de l'UE d"'urgence" à "normal" après que l'UE a de nouveau accédé au côté réseau conformément aux informations de notification ; et
la réutilisation, par le côté réseau, du support mis à jour.

8. Procédé selon la revendication 1, dans lequel le déclenchement (102) d'une procédure de détachement entre le côté réseau et l'UE par utilisation d'un trajet existant entre le côté réseau et l'UE, et l'indication d'informations d'état concernant l'appartenance CSG de l'UE comprennent :
l'envoi, par une entité de gestion de mobilité, MME, du côté réseau, d'un message de Détachement à l'UE, le message de Détachement acheminant des informations indiquant le changement de l'appartenance CSG et des informations de notification ordonnant à l'UE d'accéder de nouveau au côté réseau, et les informations indiquant le changement d'appartenance CSG étant utilisées pour ordonner à l'UE de maintenir une liste CSG locale autorisée, ACL, conformément à une identité de CSG, CSG ID, d'une cellule CSG dans laquelle l'UE se trouve à l'instant courant ;
la libération, par le côté réseau, du support par défaut entre le côté réseau et l'UE ; le changement, par le côté réseau, d'un état d'accès de l'UE d"'urgence" à "normal" après que l'UE a de nouveau accédé au côté réseau conformément aux informations de notification ; et
le rétablissement, par le côté réseau, d'un support par défaut entre le côté réseau et l'UE.

9. Procédé selon l'une quelconque des revendications 5-8, dans lequel l'envoi, par une MME du côté réseau, d'un message de détachement à l'UE consiste en :
le déclenchement, par un serveur d'abonné domestique, HSS (Home Subscriber Server), du côté réseau, de la MME pour qu'elle envoie le message de Détachement à l'UE.

10. Procédé selon la revendication 1, dans lequel le déclenchement (102) d'une procédure de détachement entre le côté réseau et l'UE par utilisation d'un trajet existant entre le côté réseau et l'UE, et l'indication d'informations d'état concernant l'appartenance CSG de l'UE comprennent :
l'envoi, par une entité de gestion de mobilité, MME, du côté réseau, d'un message de Détachement à l'UE, et la libération du support par défaut entre le côté réseau et l'UE ;
la réception d'un message de Demande de Service envoyé par l'UE, le message de Demande de Service étant un message que l'UE envoie lorsque l'UE ne reçoit pas le message de Détachement et doit démarrer un service ; et
l'envoi à l'UE d'un message de Rejet de Demande de Service, le message de Rejet de Demande de Service acheminant des informations indiquant le changement d'appartenance CSG et des informations de notification ordonnant à l'UE d'accéder de nouveau au côté réseau, et les informations indiquant le changement d'appartenance CSG étant utilisées pour ordonner à l'UE de maintenir une liste de CSG locale autorisée, ACL, conformément à une identité de CSG, CSG ID, d'une cellule CSG dans laquelle l'UE se trouve à l'instant courant.

11. Dispositif du côté réseau, configuré pour mettre en oeuvre le procédé selon l'une quelconque des revendications 1 à 10 précédentes.
